**Europäisches Patentamt**

**European Patent Office**

**Office européen des brevets**

(19)

(11) **EP 1 467 296 A1**

(12) **EUROPEAN PATENT APPLICATION**

(43) Date of publication:
**13.10.2004 Bulletin 2004/42**

(51) Int Cl.[7]: **G06F 17/60**

(21) Application number: **03252209.6**

(22) Date of filing: **08.04.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (72) Inventors: • **Little, Douglas James** **East Lindfield, NSW 2070 (AU)** • **Vann, Peter Geoffery** **Avalon Beach, NSW 2107 (AU)** |
| (71) Applicant: **Constellation Capital Management Limited** **Sydney, NSW 2000 (AU)** | (74) Representative: **Beresford, Keith Denis Lewis et al** **BERESFORD & Co.** **16 High Holborn** **London WC1V 6BX (GB)** |

(54) **Data processing system for transforming a set of financial instruments**

(57) A data processing system (5) for transforming a set of financial instruments (Fig. 2) into a compensated form is disclosed. The financial instruments have the form of a unique identified code, a country of origin, a relevant industry group name, the quantities of shares on issue, and a contemporaneous price. The data set is transformed into one of a smaller order such that a single compensated quantity is determined. The process of transformation is initiated by a client (22-28) specifying a country to be "domestic". The server (6) operates on the input data set to test, for each sub-set of instruments within each group, with that there is adequacy of the domestic financial instruments within that group, and if not, to account for shortfalls from non-domestic instruments in the respective group. The output transformed data set provided to a client (22-28) includes a calculated quantity of domestic instruments where there is adequacy in any group and a quantity of non-domestic instruments where there is a shortfall in any group.

Fig. 1

EP 1 467 296 A1

## EP 1 467 296 A1

### Description

### Field of the invention

The invention relates to a data processing system for transforming a set of financial instruments into a compensated form that is useful to managers of such portfolios and will form the basis of, or underlie a benchmark calculation. The managers can range from individual investors to large-scale investment fund managers. The motivation of the holder of the financial instruments - be it hedging or investing - is largely irrelevant.

In this specification, a reference to financial instruments includes publicly traded shares/equities and other like forms which are traded on- or off-market and which can be measured (e.g. number of shares and price).

### Background

Data processing systems have been utilised to manage financial instruments for some time now. Almost all the world's exchanges have been automated, and traders use computers to study the markets, discern trends and make transactions.

By way of example, US Patent No. 5,761,442 (Barr et al assigned to Advanced Investment Technology), issued on 2 June 1998, discloses a data processing system for selecting securities and constructing an investment portfolio based on a set of artificial neural networks which are designed to model and track the performance of each given security in a given capital market. The system outputs a parameter which is related to the expected risk-adjusted return for the security.

Another example is a data processing system for financial debt instruments, disclosed in International Patent Publication No. WO 95/27945 (Morgan Stanley Group, Inc.), published on 19 October 1995. Here, a financial debt instrument is listed for a limited period of time and traded as a listed security.

The nature of financial instruments present challenges in the implementation of data processing systems that handle them. Consider then the following situation.

Investors generally have the choice of investing funds either domestically, internationally or in a combination of the two. For example, pension funds in Europe may have a ratio of domestic (i.e. European) equity investments to international equity investments around 70:30. A prior art technique for bench marking the domestic component of an investment is to compare its performance to that of a domestic benchmark index; one European index is the FTSE World Europe Index. Similarly, the international component may be benchmarked against a suitable international index excluding the domestic component thereof, for example the "FTSE World ex Europe Index".

In many countries or regions the domestic benchmark is dominated by a small number of local companies and/or industries. For example in Europe, the banking and energy industries have weights greater than 10% which is considerably greater than the weights of these industries in a World Index. Hence the 70:30 ratio mentioned above would result in a weighting of the banking industry of approximately 13.4% which is out of step with the weight of banks in the world market. In other words, this may be considered to be an imbalanced exposure.

It is recognised that country or regional influences on equity market returns have been slowly reducing relative to factors relating to industry groups, which are typically having an increasing influence on equity markets. This reflects the globalisation of at least some industries. While international investments give rise to diversification benefits, many investors prefer to favour investing within a specific domestic economy, often to support their local industries. Put another way, the current method of balancing equity exposures between domestic and international markets attempts to provide some diversification benefits but can led to inappropriate exposures to specified segmentations (e.g. industry groups) and an unsatisfactory home bias.

### Summary

The gist of the invention is a data processing system that produces a transformed data set based on the compensation principle that local/domestic financial instruments should be held when they equal to or exceed an international measure, and international instruments should only be acquired to address shortfalls in the domestic market.

Therefore, there is provided a data processing system for transforming input data relating to a set of financial instruments to an output data set representing a compensated distribution of financial instruments. The data processing system comprises data storage means to store data representing a set of like financial instruments in a form that includes a unique identifier, a group identifier, a nationality identifier, a contemporaneous quantity and the contemporaneous value for each said instrument. There is also input means to receive a user specified input, setting one of said nationality identifiers to be domestic. Data processing means operates on said input data set to test, for each sub-set of instruments within each said group, whether there is adequacy of the domestic financial instruments within that group, and if not, to account for shortfalls from non-domestic instruments in the respective group, and determine a compensated set of instruments as a quantity of domestic instruments where there is adequacy in any group and a quantity of non-domestic instruments where there is a shortfall in any group. Output means outputs said compensated set of instruments.

A benefit of portfolio managers acting upon the output data set is that a portfolio of financial instruments is obtained that is smaller in number than current methods provide. For example, where there is adequate domestic coverage in a particular industrial group, then the number of non-domestic financial instruments will be set to zero. The manager's task is thereby simplified.

The output data set is also more meaningful than the input data set, in that it is directly referable to investment decisions that can be taken - specifying the actual quantity of financial instruments that should be held, compared with the prior art that gives only the state of the market.

There is also an economic benefit, in that practise of the invention provides justification for a home country bias with a relevant spread of industry group exposures.

In another sense, the invention can be understood as presenting a transformed output data set of a reduced number of variables. For example, the variables of 'price" and "quantity" are reduced to "quantity" only. The data processing apparatus performs a transformation on the input data to give an output data set of a smaller order.

## Brief description of the drawings

Fig. 1 is a block diagram of one form of a data processing system embodying the invention;
Fig. 2 is a block diagram of data stored in the market database of a server computer of Fig. 1.
Fig. 3 shows an example of the set of variables calculated for each industry group for an input data set stored in the weight and scaling table of the server computer of Fig. 1.
Figs. 4-7 are flow diagrams of the methodology implemented on the data processing apparatus; and
Fig. 8 shows a screen display of an output data set.

## Detailed description

*Data processing system*

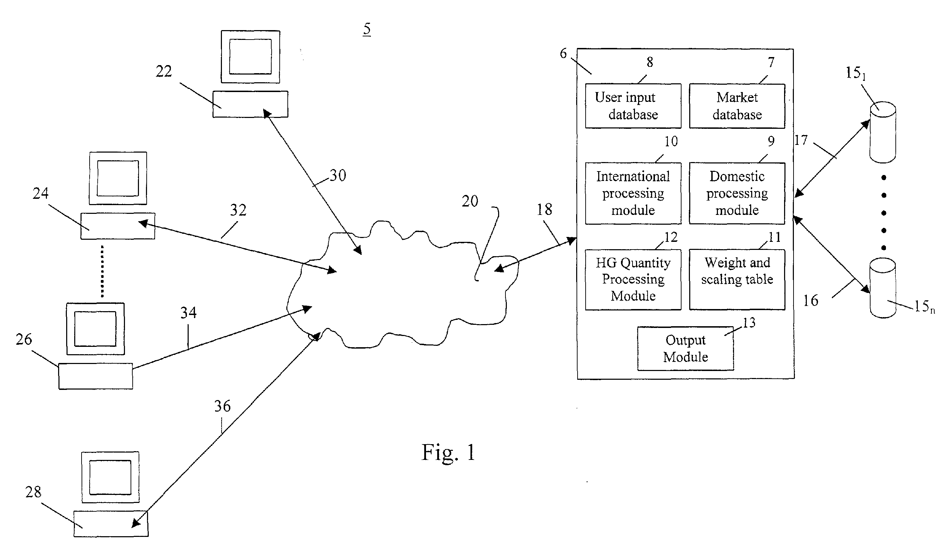

Referring now to Fig. 1, a data processing system 5 embodying the invention is shown. A server computer 6 gathers and stores input index data from one or more index databases 15 over secure data links 16, 17. The index databases 15 can be local to the server 6 or sourced from a independent service provider.

The server 6 is further connected to a network 20 by a data link 18. The network 20 can be of any desired public or private type.

A number of client or user computers 22-28 are also connected by respective data links 30-36 to the network 20. These clients 22-28 can be in geographically disparate locations, including various different countries. Although only four client machines are shown, it will be appreciated that any number can be supported.

A client will, operationally, subscribe to the service offered by the server 6 and be supplied with either the output data set for the domestic country in which the client resides, or the data set for any number of domestic country combinations. Alternatively, the server 6 may allow a client to download a program (e.g. Java applet) and input data set so that the client can perform the processing locally. In either way, a user/client may input data (e.g. 'domestic' country) that is utilised in the subsequent data processing.

The server 6 in this embodiment has a number of constituent modules. The market database 7 stores the data received from the index databases 15, together with any predetermined data (e.g. "maximum stock weight" and "market value of HomeGlobal portfolio") for subsequent processing. The user inputs database 8 stores data received from the client machines 22-28 (e.g. "domestic" country). The domestic scaling module 9 acts on that portion of the input data relating to the designated domestic country. The international scaling module 10 operates on the remainder of the input data.

A weight and scaling table 11 is generated in the course of processing, and will be presently discussed. A HomeGlobal Quantity processing module 12 generates an output or results set based on the previous processing of domestic and international data. Finally, an output module 13 generates a graphical representation of the output data which is transmitted via the network 20 to the clients 22-28 where it is displayed.

*Input data sets*

The embodiment to be described utilises, as an input, a contemporaneous stock index that compiles data from a set of individual equities listed on various exchanges, and forms that data into groups and determines relative weighting of each group against the full set.

An example of such is the Global Industry Classification Standards (GICS)™. This classification was introduced by Morgan Stanley Capital International (MSCI)™ and Standard & Poor (S&P)™ in 1999. The GICS™ classifies each financial investment into one of:

- 123 sub-industries, each of which belong to one of
- 59 industries, each of which belong to one of
- 23 industry groups, each of which belong to one of
- 10 sectors

To aid understanding, in this application the specific example of an index presented is based on a hypothetical index ("H-Index") having groups as follows.

| Industry groups |
| --- |
| Automobiles & Components |
| Banks |
| Capital Goods |
| Commercial Services & Supplies |
| Consumer Durables & Apparel |
| Diversified Financials |
| Energy |
| Food & Drug Retailing |
| Food Beverage & Tobacco |
| Health Care Equipment & Service |
| Hotels Restaurants & Leisure |
| Household & Personal Products |
| Industrial Conglomerates |
| Insurance |
| Materials |
| Media |
| Multi-Sector Holdings |
| Pharmaceuticals & Biotechnology |
| Real Estate |
| Retailing |
| Software & Services |
| Technology Hardware & Equipment |
| Telecommunication Services |
| Tyres & Rubber |
| Transportation |
| Utilities |

**Table 1**

In addition to grouping equities by industry, the index also associates equities with a country or geography. At this point it is useful to ascribe a definition to geographies within the H-index. The term "domestic" refers to equities listed on the exchange(s) of a particular country or group of countries. Most usually it will be the home country of a user of the data processing system. It can also refer to a regional grouping of countries (e.g. the European Union).

The terms "non-domestic", "international" and "foreign" refer to the set of index data) *excluding* the domestic component.

*The H-Index data set*

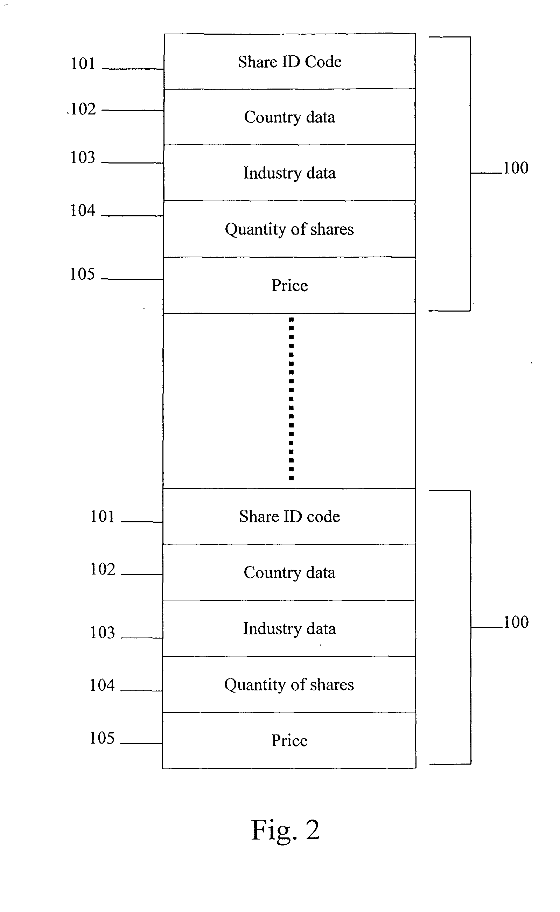

In this embodiment the format of the H-Index data set takes the form shown in Figure 2. That is to say the input data set received from the index data base 15 comes in the form of a number of records 100, one for each of the equities included in the index. Each of the records comprises a unique identifier code 101, country data 102 identifying the market the equity is traded on, industry data 103 comprising an industry group name identifying an industry sector, quantity of shares data 104 identifying the number of tradeable shares associated with the equity and price data 105 being a share price for shares in the equity. The price is conveniently reckoned in a common unit of currency.

Thus in this way the data set groups equities by industry sector and country. The data set also associates each equity with a share price and quantity of shares. Together the share price and quantity of shares define a market capitalization for each equity in the index.

In this embodiment data of the form of Figure 2 is received from the index databases 15 and stored in the market database 7. It will, however, be appreciated that in other embodiments, the static data for equities, for example, county data 102 and industry data 103 could be prestored in the market database 7 and only the remaining data transmitted via the secure data links 16, 17 thereby reducing data flow.

A full example data set for the H-index is illustrated in appendix A. In this example 1542 records identifying 1542 stocks are included in the index. In the example, the countries (and respective total number of equities) included in the index are:

Table 2

| Country | Quantity |
|---|---|
| Australia | 73 |
| Canada | 86 |
| Europe* | 566 |
| Hong Kong | 28 |
| Japan | 325 |
| New Zealand | 14 |
| Singapore | 36 |
| USA | 414 |

*Representing the summation of entries for Austria, Belgium, Denmark, Finland, France, Germany, Greece, Ireland, Italy, Netherlands, Norway, Portugal, Spain, Sweden, Switzerland and United Kingdom.

*Overview of Software Processing*

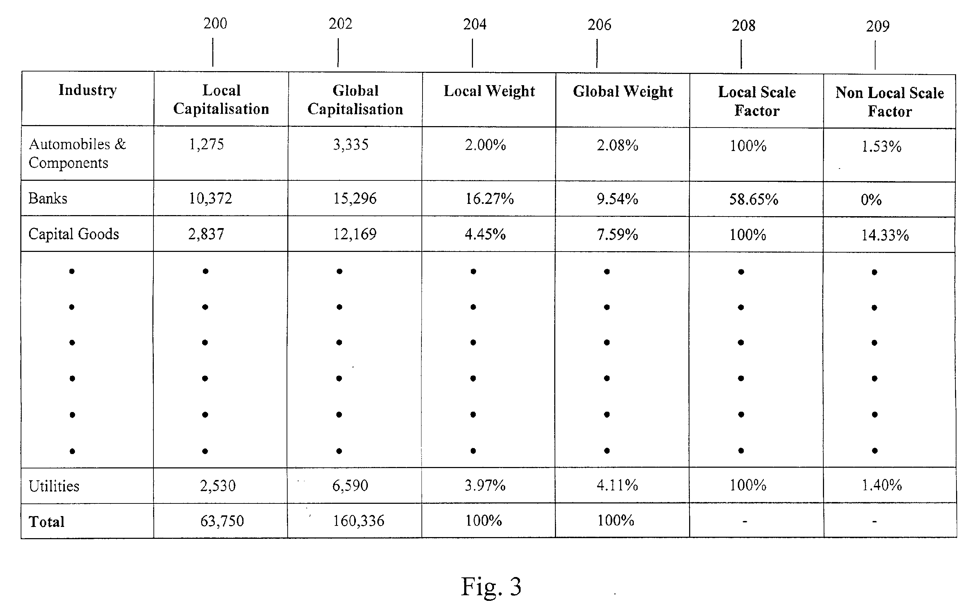

The data set is transformed, by a series of operations, to give a recommended spread of equities that are weighted to provide a relevant domestic bias as will now be described in outline with reference to Fig. 3.

Referring to Figure 3 which is a schematic illustration of data stored in the weight and scaling table 11 of the computer server 6, utilising the quantity of shares data 104 and price data 105 for equities associated with different country data 102 and industry 103, market capitalization for each industry sector both for all equities and for equities associated with a particular country are calculated. This local and global capitalization data 200, 202 is then stored in the weight and scaling table 11. This capitalization data 200, 202 is then processed as will be described in detail later to generate a set of industry weightings 204, 206 which in turn are processed to determine local and non local scale factors 208, 209 for each industry sector. These scale factors 208, 209 are then utilised to generate output data.

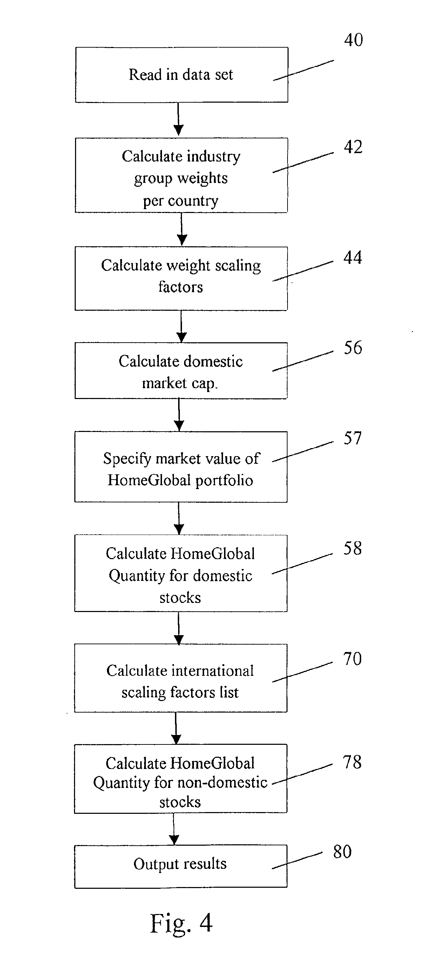

The processing of data to determine local and non local scale factors will now be described in detail with reference to Figures 4-7.

Initial stocks processing

The input data set, in the form earlier specified, is read into a memory array (step 40) within the market database module 7.

A set of industry weightings (eg. fraction of the total market capitalisation) are calculated from this data (step 42): a global weighting by industry and a domestic weighting by industry. The domestic weighting is calculated relevant to the total market capitalisation of all domestic financial instruments in the data set. In the scheme of Fig. 1, this processing is performed by the respective domestic processing module 9 and international processing module 10.

Taking the specific case of Europe being the 'domestic' country of interest (as selected by the client and recorded in the user inputs database 8), then operating on the input data set the following results arise.

Table 3

| List of Industry Groups | Global Weight | Weight in Europe |
|---|---|---|
| Automobiles & Components | 2.08% | 2.00% |
| Banks | 9.54% | 16.27% |
| Capital Goods | 7.59% | 4.45% |
| Commercial Services & Supplies | 1.53% | 0.98% |
| Consumer Durables & Apparel | 1.99% | 1.96% |
| Diversified Financials | 5.94% | 2.48% |
| Energy | 6.74% | 11.21% |
| Food & Drug Retailing | 1.56% | 1.95% |
| Food Beverage & Tobacco | 4.04% | 5.00% |
| Health Care Equipment & Service | 1.69% | 0.60% |
| Hotels Restaurants & Leisure | 0.93% | 1.22% |
| Household & Personal Products | 1.24% | 0.70% |
| Industrial Conglomerates | 0.14% | 0.00% |
| Insurance | 4.22% | 6.27% |
| Materials | 3.72% | 4.76% |
| Media | 4.96% | 4.21% |
| Multi-Sector Holdings | 0.02% | 0.00% |
| Pharmaceuticals & Biotechnology | 10.07% | 11.10% |
| Real Estate | 0.75% | 0.50% |
| Retailing | 3.54% | 1.57% |
| Software & Services | 4.02% | 1.60% |
| Technology Hardware & Equipment | 11.34% | 6.06% |
| Telecommunication Services | 6.92% | 9.82% |
| Tyres & Rubber | 0.00% | 0.01% |
| Transportation | 1.32% | 1.29% |
| Utilities | 4.11% | 3.97% |
| Totals | 100.0% | 100.0% |

These first results are then stored in a weight and scaling table 11 as shown in Figure 3.

Domestic stocks processing

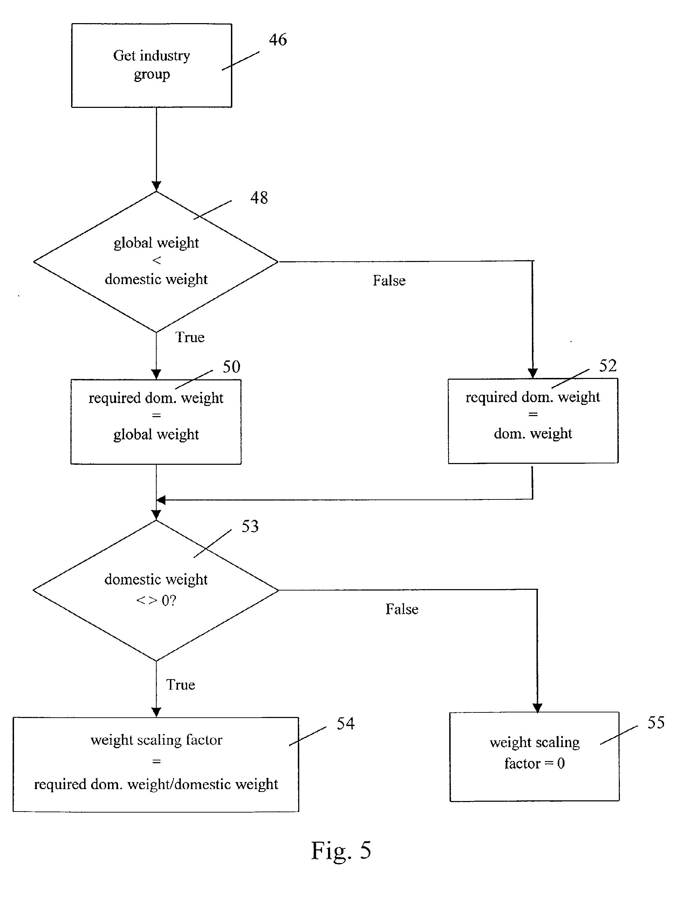

Next, the "required domestic weight" is calculated per industry (step 44) by the domestic processing module 9. Reference is made to Fig. 5, that shows this calculation in greater detail. Each industry group is fetched in turn (step 46). A determination is made of whether the global weight is less than the domestic weight (step 48). If true, then the "required domestic weight" is set to be equal to the global weight (step 50). If false, then the "required domestic weight' is set to be equal to the "domestic weight" (step 52).

This is an important aspect of the operation of the data processing system, in that it embodies the idea that where a domestic industry weighting is in excess of the global industry weighting, then there is adequacy of equities in the domestic market, and if not then there is a shortfall, both of which conditions affect the subsequent processing in terms of the output data set of recommended equities.

A check is now made (step 53) of whether the domestic weight < > 0. If True, then a "weight scaling factor" is determined (step 54) as:

weight scaling factor = required domestic weight / actual domestic weight

For the input data set, and for "Europe=domestic", this leads to the result:

Table 4

| List of Industry Groups | Scaling Factors |
|---|---|
| Automobiles & Components | 100.00% |
| Banks | 58.65% |
| Capital Goods | 100.00% |
| Commercial Services & Supplies | 100.00% |
| Consumer Durables & Apparel | 100.00% |
| Diversified Financials | 100.00% |
| Energy | 60.16% |
| Food & Drug Retailing | 79.97% |
| Food Beverage & Tobacco | 80.65% |
| Health Care Equipment & Service | 100.00% |
| Hotels Restaurants & Leisure | 76.77% |
| Household & Personal Products | 100.00% |
| Industrial Conglomerates | 0.00% |
| Insurance | 67.39% |
| Materials | 78.17% |
| Media | 100.00% |
| Multi-Sector Holdings | 0.00% |
| Pharmaceuticals & Biotechnology | 90.68% |
| Real Estate | 100.00% |
| Retailing | 100.00% |
| Software & Services | 100.00% |
| Technology Hardware & Equipment | 100.00% |
| Telecommunication Services | 70.46% |
| Tyres & Rubber | 28.80% |
| Transportation | 100.00% |
| Utilities | 100.00% |

These results are also stored in the weight and scaling table 11.
If the test in step 53 is False, then (step 55):

weight scaling factor = 0

This avoids a 'divide by zero' problem.

Returning to Fig. 4, a calculation is now made of the total domestic market capitalisation of equities (step 56), by the formula:

$$\Sigma(\text{stock price}^{*}\ \text{quantity of shares})_{\text{all domestic equities}}$$

The specification of the "market value of HomeGlobal portfolio" is now introduced (step 57), which equals

$$\Sigma(\text{stock price}^{*}\ \text{HomeGlobal Quantity})_{\text{all domestic \& international equities}}$$

The "market value of HomeGlobal portfolio" is a dollar figure specified by the user, stored in the user inputs database 8. For example, a provider of indices may equate it to the "total domestic market capitalisation", whereas an investment manager may equate it to the value of the monies to be invested. In the example of the attached code and Appendices, the "market value of HomeGlobal portfolio" is set as the "total domestic market capitalisation". This can be a default setting in the absence of its specification by the user.

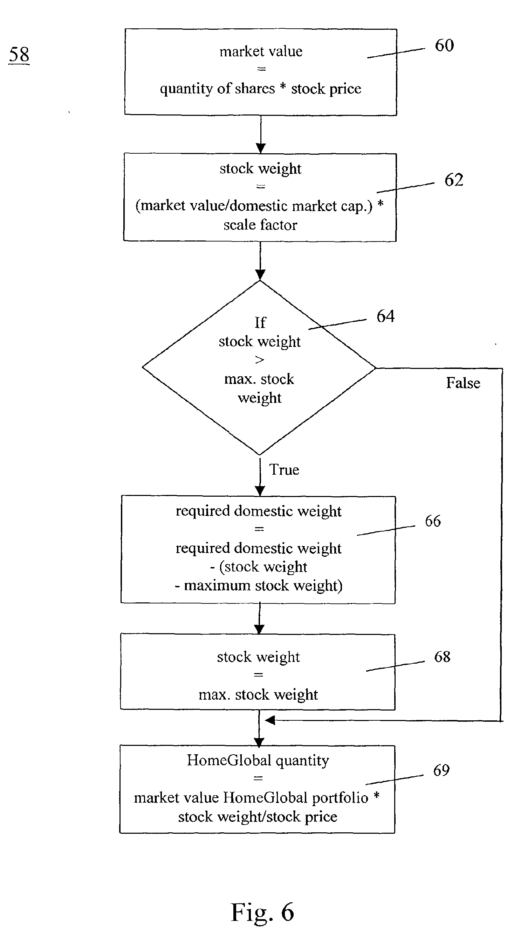

Next, a value, termed the "HomeGlobal Quantity", is calculated for *each* domestic stock (step 58) by the processing module 12. This is shown in greater detail in Fig. 6.

The "market value" of each stock is calculated (step 60) as:

$$\text{quantity of shares}^{*}\ \text{stock price}$$

Then a "stock weight" is calculated (step 62) as:

$$\text{market value / domestic market capitalisation}^{*}\ \text{scale factor for relevant industry group}$$

This result too is stored in the weight and scaling table 11.

Next, a determination is made of whether the stock weight exceeds a predetermined "maximum stock weight" (step 64). The purpose of this test is to further reduce the concentration of domestic stocks with large market capitalisation. If the result is True, then, in the present example for which the maximum stock weight is 5% (0.05), the "required domestic weight" for the industry sector of the stock (step 66) is decreased by the difference between the stock weight calculated in step 62 and the maximum stock weight. Then, the stock weight is set to be equal to the "maximum stock weight" (step 68). The maximum stock weight can be specified by either a user or as a predetermined value held on the server 5.

A HomeGlobal Quantity for the stock under consideration is then calculated (step 69) as being:

$$\text{market value of HomeGlobal portfolio}^{*}\ \text{stock weight / stock price}$$

Appendix B shows the HomeGlobal Quantity for a subset of 25 stocks of the 566 total European stocks.

International stocks processing

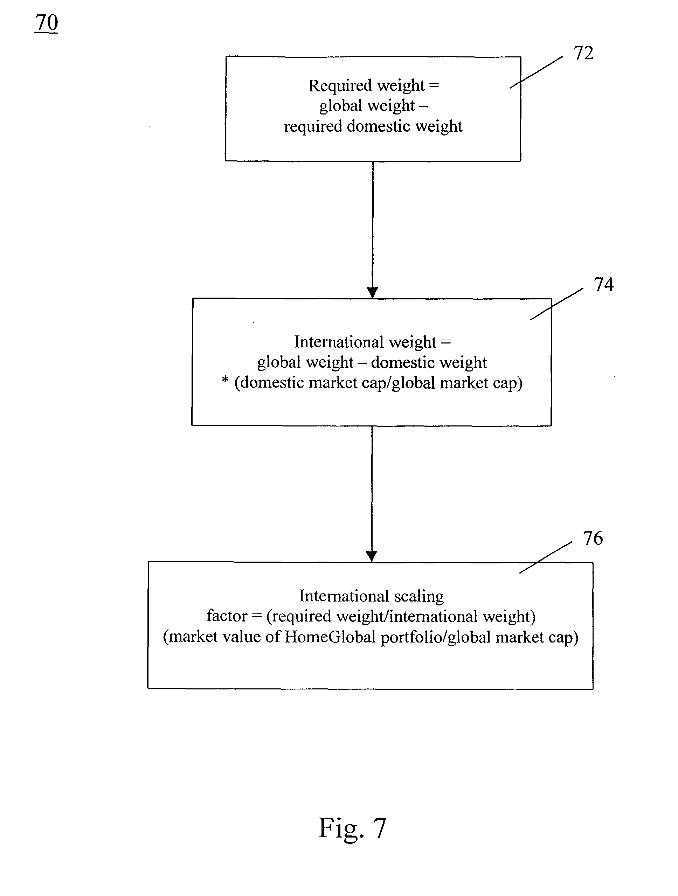

The domestic stocks have been processed, and it is now necessary to calculate an international scaling factors list (for each industry) (step 70) for the international stocks, shown particularly in Fig. 7.

The "required international weight" is calculated (step 72) by the international processing module 10 as:

$$\text{global weight - required domestic weight}$$

The "required international weight" is the component of the industry group which will be invested in international equities due to "inadequate" coverage, i.e. a shortfall, in the domestic market for that industry.

Table 5

| List of Industry Groups | Required International Weight |
|---|---|
| Automobiles & Components | 0.08% |
| Banks | 0.00% |
| Capital Goods | 3.14% |
| Commercial Services & Supplies | 0.55% |
| Consumer Durables & Apparel | 0.03% |
| Diversified Financials | 3.46% |
| Energy | 0.00% |
| Food & Drug Retailing | 0.00% |
| Food Beverage & Tobacco | 0.00% |
| Health Care Equipment & Service | 1.09% |
| Hotels Restaurants & Leisure | 0.00% |
| Household & Personal Products | 0.55% |
| Industrial Conglomerates | 0.14% |
| Insurance | 0.00% |
| Materials | 0.00% |
| Media | 0.75% |
| Multi-Sector Holdings | 0.02% |
| Pharmaceuticals & Biotechnology | 0.00% |
| Real Estate | 0.25% |
| Retailing | 1.96% |
| Software & Services | 2.42% |
| Technology Hardware & Equipment | 5.27% |
| Telecommunication Services | 0.00% |
| Tyres & Rubber | 0.00% |
| Transportation | 0.04% |
| Utilities | 0.14% |

The values are included in the weight and scaling table 11.

Next, an "international weight", i.e. the weight of international equities in this sector relative to the global index, is calculated (step 74) as:

$$\text{global weight - domestic weight}^{*} \text{ (domestic market capitalisation/global market}$$

$$\text{capitalisation)}$$

Then an "international scaling factor" is calculated (step 76) as:

$$\text{(required international weight/international weight)}^{*} \text{(market value of HomeGlobal portfolio}$$

$$\text{/global market capitalisation)}$$

This process is repeated for each industry group, and included in the weight and scaling table 11. The "international scaling factor" for an industry represents the portion of each international stock in that industry that will be required in the HomeGlobal index/portfolio. For example, if domestic stocks adequately cover the industry, then the scaling factor will be zero. In the example provided, 354 of the 1188 international stocks are in industries that have scaling factors equal to zero. On the other hand, if there are no domestic stocks in an industry, then the international scaling factor will be the ratio of the domestic and global market capitalisations and application of this scaling factor to obtain the HomeGlobal Quantity will result in a dollar value for the industry equal to the domestic market value multiplied by the global weight of the industry.

Typical "international scaling factors" are provided in the following table where the "market value HomeGlobal portfolio" is set as the "total domestic market capitalisation".

Table 6

| List of Industry Groups | International Scaling Factors |
|---|---|
| Automobiles & Components | 1.53% |
| Banks | 0.00% |
| Capital Goods | 14.33% |
| Commercial Services & Supplies | 12.65% |
| Consumer Durables & Apparel | 0.59% |
| Diversified Financials | 19.08% |
| Energy | 0.00% |
| Food & Drug Retailing | 0.00% |
| Food Beverage & Tobacco | 0.00% |
| Health Care Equipment & Service | 20.62% |
| Hotels Restaurants & Leisure | 0.00% |
| Household & Personal Products | 15.11% |
| Industrial Conglomerates | 28.80% |
| Insurance | 0.00% |
| Materials | 0.00% |
| Media | 5.73% |
| Multi-Sector Holdings | 28.80% |
| Pharmaceuticals & Biotechnology | 0.00% |
| Real Estate | 11.70% |
| Retailing | 18.33% |
| Software & Services | 19.57% |
| Technology Hardware & Equipment | 15.84% |
| Telecommunication Services | 0.00% |
| Tires & Rubber | 0.00% |
| Transportation | 1.11% |
| Utilities | 1.40% |

Once again returning to Fig. 4, the next processing step, is performed by the processing module 12 is, for each non-domestic stock, to calculate a HomeGlobal Quantity (step 78) as:

$$\text{market value}^* \text{ international scaling factor / stock price}$$

Output of results

The final step is the compilation and outputting of results (step 80) performed by the output module 13. The output data set is the transformed input data set the respective (international or domestic) HomeGlobal Quantity ascribed to each stock. The output data set for a representative set of 25 stocks from amongst the international stocks is shown in Appendix C. The HomeGlobal Quantity represents the number of shares that should be included in a portfolio. All of the international shares falling within industry groups where there is adequacy are also listed. Each of the stocks in each industry group have the HomeGlobal Quantity of "0".

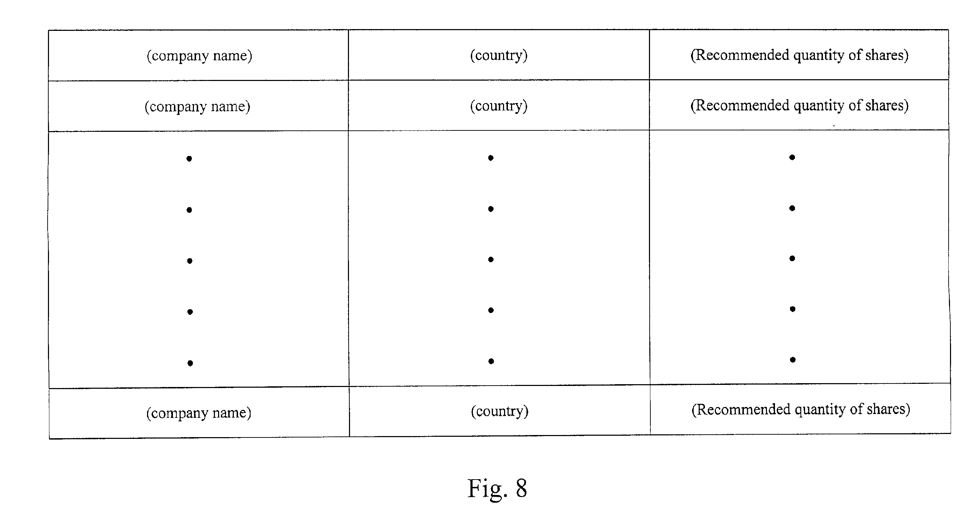

The output data represented in Appendix C are transmitted to the relevant client machine/s 22-28 in a tabulated or graphically represented form. It would be usual to include a reduced data set including only those stocks having a non-zero HomeGlobal Quantity to reduce the burden on the user and the processing required to be done by the client machines. One form of representation is shown in Fig. 8.

The information can serve as a benchmark against which investors measure their own portfolios. The output data set is also more meaningful than the input data set, in that it is directly referable to investment decisions that can be taken - specifying the actual quantity of financial instruments that should be held, compared with the prior art that gives only the state of the market.

A benefit of portfolio managers acting upon the output data set is that a portfolio of financial instruments is obtained that is smaller in number than current methods provide. As demonstrated by Appendix C, where there is adequate domestic coverage in a particular industrial group, then the quantity of non-domestic financial instruments in that group will be set to zero. The manager's task is thereby simplified.

There is also an economic benefit, in that a more relevant home country bias with a relevant spread of industry group exposures is achieved.

In another sense, the data processing system can be understood as presenting a transformed output data set of a reduced number of variables. For example, the variables of 'price" and "quantity" are reduced to "quantity" only. The two measures term "quantity are different in nature, however. In the input file, it is the quantity of stocks being traded, but in the output data set, it is the quantity of shares that should be held. The units may be the same, but the respective quantities have different significance.

*Code*

The software processing has been implemented in the Python™ scripting language (available from www. python.org). There are three input files, and one output file:

```
Input file CSV format - IndustryGroupWeights.csv

Fields -  Industry Group Name, Global Weight, Domestic Market Weight


Input file CSV format - StockList.csv

Fields -  StockNumber, Country, Industry Group Name, Number of

Shares in Global Index, Price


Input file CSV format - MaximumStockWeight.csv

Field - Maximum Stock Weight


OutPut file CSV format - OutputStockList.csv

Fields -  StockNumber, Country, Industry Group Name, Quantity of

Shares in HomeGlobal Index

"""
```

The code is as follows:

```
from string import *

# User defined variables
Country = 'AUSTRALIA'          # the name of the domestic country
CountryStr = ""       # inserted into filename to get specific
country weights

# Initialise internal variables
DomesticScalingList = { }        # the list of Industry Group Names
and associated scaling factors for domestic industries
Industry_Group_Name = { }
```

```
InternationalScalingList = { }        # the list of Industry Group
Names and associated scaling factors for international industries
GlobalIndustryWeightList = { }
DomesticIndustryWeightList = { }
HomeGlobal_Domestic_Industry_Weight = { }
Max_Stock_Weight = 0
Sum_Raw_Weights = 0
Total_Domestic_market_value = 0
Total_adjusted_Domestic_market_value = 0
all_fields = [ ]                      # in memory array of stocks data


# Indexes into the CSV fields of file StockList.csv
StockNumber_index = 0
Country_index = 1
Industry_Group_Name_index = 2
Number_of_Shares_in_Global_Index_index = 3
Price_index = 4
Temp_index = 5                        # in memory, a working field for
intermediate results
HomeGlobal_index = 6                  # in memory, field for final results


# Indexes into the CSV fields of file IndustryGroupWeights.csv
Industry_Group_Names_index = 0
Global_Industry_Weight_index = 1
Domestic_Industry_Weight_index = 2


# Get maximum stock weight allowed
maxweightfile = open(file_path + "MaximumStockWeight.csv")
Max_Stock_Weight = eval(replace(maxweightfile.readline(),"%",""))
# strip % & convert to from text


# Calculate scaling factors for each industry
```

```
weightsfile = open(file_path + "IndustryGroupWeights" + CountryStr +
".csv")
i = 0
for line in weightsfile.readlines():           # process each line
(group) in the file
    fields = splitfields(line,",")        # separate out the CSV
fields
    if find(fields[Global_Industry_Weight_index], '"') == -1 and
fields[Global_Industry_Weight_index]:# skip comments or empty lines
        Global_Industry_Weight =
eval(fields[Global_Industry_Weight_index])
        Domestic_Industry_Weight =
eval(fields[Domestic_Industry_Weight_index])
        Required_Domestic_Industry_weig =
min(Domestic_Industry_Weight,Global_Industry_Weight)
        if Domestic_Industry_Weight:           # check for division by
0
            Weight_scaling_factor = Required_Domestic_Industry_weig
/ Domestic_Industry_Weight  # calculate scaling factor
        else:
            Weight_scaling_factor = 0        # no scaling factor
        this_group =
replace(fields[Industry_Group_Names_index],'"','')       # strip
quotes
        DomesticScalingList[this_group] = Weight_scaling_factor
# insert scaling factor into list
        GlobalIndustryWeightList[this_group] =
Global_Industry_Weight        # insert global weight into list
        DomesticIndustryWeightList[this_group] =
Domestic_Industry_Weight
        Industry_Group_Name[i] = this_group
        HomeGlobal_Domestic_Industry_Weight[this_group] =
Required_Domestic_Industry_weig
        i = i + 1
```

```
weightsfile.close()


# Process the list of stocks
# read stock data from the input file and build stock data in memory
stockfile = open(file_path + "StockList.csv")
for line in stockfile.readlines():
    fields = splitfields(line,",")        # split the cells by commas
    if find(fields[StockNumber_index], '"') == -1 and
fields[StockNumber_index]:        # skip comments or empty lines
        CountryName = replace(fields[Country_index],'"','')      #
strip surrounding " "
        GroupName =
replace(fields[Industry_Group_Name_index],'"','')
        # strip NEWLINE and add 2 empty fields for calculations
        newfields =
[fields[StockNumber_index],CountryName,GroupName,fields[Number_of_Sh
ares_in_Global_Index_index],rstrip(fields[Price_index]),'0','0']
        all_fields.append(newfields)         # add to memory array
stockfile.close()


# Calculate the total market capitalisation of domestic stocks and
all stocks (i.e. Global market cap)
i = 0
Domestic_Market_Cap = 0
Global_Market_Cap = 0
while i < len(all_fields):
    field = all_fields[i]
    Stock_Price = eval(field[Price_index])
    Num_Shares = eval(field[Number_of_Shares_in_Global_Index_index])
    MarketValue = Stock_Price*Num_Shares
    Global_Market_Cap = Global_Market_Cap + MarketValue
    if field[Country_index] ==  Country:
        Domestic_Market_Cap = Domestic_Market_Cap + MarketValue
    i = i + 1
```

```
Domestic_Market_Weight = Domestic_Market_Cap/Global_Market_Cap
# set the market value of the HomeGlobal portfolio to the
# domestic market cap - e.g. for the purpose of calculating the
# composition for an index
Market_Value_of_HomeGlobal_Portfolio = Domestic_Market_Weight


# Apply the HomeGlobal test of adequacy to each domestic stock in
the list
i = 0
while i < len(all_fields):
    field = all_fields[i]
    if field[Country_index] == Country:         # do domestic
stocks only
        this_group = field[Industry_Group_Name_index]
        Stock_Price = eval(field[Price_index])
        MarketValue =
eval(field[Number_of_Shares_in_Global_Index_index]) * Stock_Price
# calculate market value
        Scale_value =
DomesticScalingList[field[Industry_Group_Name_index]]
        # the Scale_value applies the HomeGlobal adequacy test
relating to the adequacy of the stock's industry group
        StockWeight = MarketValue / Domestic_Market_Cap *
Scale_value
        # also apply a variation of the simplest HomeGlobal method
which limits the maximum weight of a domestic stock
        if StockWeight > Max_Stock_Weight:
            # adjust the domestic industry weight if a stock weight
is scaled back to the maximum stock weight
            HomeGlobal_Domestic_Industry_Weight[this_group] =
HomeGlobal_Domestic_Industry_Weight[this_group] - (StockWeight -
Max_Stock_Weight )
            StockWeight = Max_Stock_Weight
        field[HomeGlobal_quantity] =
```

```
Market_Value_of_HomeGlobal_Portfolio * StockWeight / Stock_Price    #
calculate the number of shares for the stock
    all_fields[i] = field
    i = i + 1


# Determine the required international industry scaling factors
i = 0
while i < len(GlobalIndustryWeightList):
    this_group = Industry_Group_Name[i]
    Required_International_Industry_Weight =
GlobalIndustryWeightList[this_group] -
HomeGlobal_Domestic_Industry_Weight[this_group]
    InternationalIndustryWeight =
GlobalIndustryWeightList[this_group] -
DomesticIndustryWeightList[this_group] * Domestic_Market_Weight
    InternationalScalingList[this_group] =
Required_International_Industry_Weight / InternationalIndustryWeight
* Market_Value_of_HomeGlobal_Portfolio
    i = i + 1


# Process all non-domestic stocks in the stock list
i = 0
while i < len(all_fields):
    field = all_fields[i]
    if field[Country_index] !=  Country:
        Stock_Price = eval(field[Price_index])
        Num_Shares =
eval(field[Number_of_Shares_in_Global_Index_index])
        MarketValue = Stock_Price*Num_Shares
        this_group = field[Industry_Group_Name_index]
        # Calculate the number of shares for the international
stocks to satisfy the shortfall
```

```
        # not met from an adequate value of domestic stocks in this
industry.
        # The calculation is the market value times the scaling
factor determined for the industry group the stock is in
        # the multiplication of Domestic_Market_Weight ensures
        # the total market cap of the HomeGlobal portfolio
        # is equal to the market cap of the domestic market in the
Global portfolio of stocks
        # listed in the StockList.csv file
        # Note that the number of shares of all stocks can be scaled
up or down by a common factor to derive
        # any desired market value of a HomeGlobal portfolio for any
country.
        field[HomeGlobal_quantity] = MarketValue *
InternationalScalingList[this_group] / Stock_Price
    all_fields[i] = field
    i = i + 1


# Write out the results
outfile = open(file_path + "OutputStockList.csv",'w')
i = 0
while i < len(all_fields):
    fields = all_fields[i]
    outfile.write(str(fields[StockNumber_index]) + "," +
str(fields[Country_index])
    + "," + str(fields[Industry_Group_Name_index]) + "," +
str(fields[HomeGlobal_index]) + "\n")
    i = i + 1
outfile.close()
```

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

**Appendix A**

| | | | | |
|---|---|---|---|---|
| 6624608 | AUSTRALIA | Banks | 1,908 | 29.59 |
| 6144690 | AUSTRALIA | Materials | 1,437 | 32.24 |
| 6215035 | AUSTRALIA | Banks | 2,135 | 21.02 |
| 6886925 | AUSTRALIA | Media | 2,753 | 11.36 |
| 6620758 | AUSTRALIA | Media | 97,979 | 0.31 |
| 6115715 | AUSTRALIA | Insurance | 535 | 49.54 |
| 6065586 | AUSTRALIA | Banks | 1,297 | 18.83 |
| 6076146 | AUSTRALIA | Banks | 806 | 30.11 |
| 6087289 | AUSTRALIA | Telecommunication Services | 1,704 | 9.89 |
| 6120009 | AUSTRALIA | Commercial Services & Supplies | 3,194 | 4.42 |
| 6220103 | AUSTRALIA | Materials | 1,025 | 13.08 |
| 6954985 | AUSTRALIA | Materials | 825 | 15.02 |
| 6981239 | AUSTRALIA | Food & Drug Retailing | 1,042 | 11.6 |
| 6349268 | AUSTRALIA | Food Beverage & Tobacco | 1,997 | 5.84 |
| 6209908 | AUSTRALIA | Food & Drug Retailing | 306 | 31.89 |
| 6948836 | AUSTRALIA | Capital Goods | 214 | 36.12 |
| 6979728 | AUSTRALIA | Energy | 194 | 39.72 |
| 6512004 | AUSTRALIA | Real Estate | 244 | 30.7 |
| 6054142 | AUSTRALIA | Real Estate | 13,023 | 0.57 |
| 6956312 | AUSTRALIA | Real Estate | 234 | 29.39 |
| 6238645 | AUSTRALIA | Materials | 258 | 25.44 |
| 6185495 | AUSTRALIA | Pharmaceuticals & Biotechnology | 388 | 16.85 |
| 6551353 | AUSTRALIA | Diversified Financials | 472 | 13.74 |
| 6365866 | AUSTRALIA | Real Estate | 241 | 23.27 |
| 6715740 | AUSTRALIA | Insurance | 103 | 53.08 |
| 6271026 | AUSTRALIA | Insurance | 276 | 19.24 |
| 6764689 | AUSTRALIA | Capital Goods | 8,972 | 0.56 |
| 6776703 | AUSTRALIA | Energy | 91 | 53.91 |
| 6585084 | AUSTRALIA | Diversified Financials | 118 | 41.43 |
| 6066608 | AUSTRALIA | Materials | 139 | 34.39 |
| 6064969 | AUSTRALIA | Utilities | 540 | 8.22 |
| 6173508 | AUSTRALIA | Retailing | 88 | 38.71 |
| 6467074 | AUSTRALIA | Media | 13,078 | 0.26 |

(continued)

| | | | | |
|---|---|---|---|---|
| 6850856 | AUSTRALIA | Real Estate | 7,972 | 0.42 |
| 6180412 | AUSTRALIA | Commercial Services & Supplies | 147 | 21.85 |
| 6574606 | AUSTRALIA | Health Care Equipment & Service | 148 | 20.38 |
| 6456942 | AUSTRALIA | Transportation | 15,865 | 0.19 |
| 6123451 | AUSTRALIA | Food Beverage & Tobacco | 49 | 57.25 |
| 6550167 | AUSTRALIA | Materials | 1,631 | 1.69 |
| 6161978 | AUSTRALIA | Real Estate | 51 | 48.67 |
| 6211798 | AUSTRALIA | Health Care Equipment & Service | 38 | 59.56 |
| 6253983 | AUSTRALIA | Hotels Restaurants & Leisure | 31 | 69.3 |
| 6645201 | AUSTRALIA | Materials | 375 | 5.85 |
| 6200882 | AUSTRALIA | Transportation | 81 | 25.81 |
| 6816308 | AUSTRALIA | Capital Goods | 74 | 28.16 |
| 6332600 | AUSTRALIA | Pharmaceuticals & Biotechnology | 92 | 20.68 |
| 6120496 | AUSTRALIA | Hotels Restaurants & Leisure | 53 | 34.17 |
| 6137504 | AUSTRALIA | Real Estate | 113 | 15.46 |
| 6409407 | AUSTRALIA | Materials | 72 | 24.05 |
| 6873262 | AUSTRALIA | Hotels Restaurants & Leisure | 120 | 14.24 |
| 6218670 | AUSTRALIA | Materials | 38 | 43.27 |
| 6392466 | AUSTRALIA | Real Estate | 76 | 21.78 |
| 6222206 | AUSTRALIA | Materials | 34 | 47.41 |
| 6821120 | AUSTRALIA | Health Care Equipment & Service | 111 | 13.98 |
| 6637082 | AUSTRALIA | Media | 74 | 20.72 |
| 6357852 | AUSTRALIA | Food Beverage & Tobacco | 455 | 3.37 |
| 6070041 | AUSTRALIA | Food Beverage & Tobacco | 87 | 17.13 |
| 6458001 | AUSTRALIA | Materials | 41 | 35.82 |
| 6214861 | AUSTRALIA | Energy | 77 | 18.84 |
| 6336549 | AUSTRALIA | Food Beverage & Tobacco | 89 | 16.29 |
| 6129222 | AUSTRALIA | Diversified Financials | 43 | 33.33 |
| 6511227 | AUSTRALIA | Capital Goods | 37 | 34.05 |
| 6296870 | AUSTRALIA | Technology Hardware & Equipment | 3,163 | 0.4 |
| 6361370 | AUSTRALIA | Real Estate | 80 | 15.4 |
| 6637101 | AUSTRALIA | Materials | 19 | 61.23 |
| 6307385 | AUSTRALIA | Utilities | 78 | 13.53 |
| 6286611 | AUSTRALIA | Capital Goods | 15 | 68.06 |
| 6957575 | AUSTRALIA | Materials | 3,794 | 0.27 |
| 6206062 | AUSTRALIA | Real Estate | 21 | 46.99 |
| 6821324 | AUSTRALIA | Materials | 58 | 16.63 |
| 6255484 | AUSTRALIA | Real Estate | 79 | 11.97 |
| 6293729 | AUSTRALIA | Materials | 38 | 12.95 |

(continued)

| 6256465 | AUSTRALIA | Retailing | 152 | 3.2 |
|---------|-----------|-----------|-----|-----|
| 5289837 | EU | Banks | 163 | 18.43 |
| 4651459 | EU | Energy | 195 | 13.98 |
| 5355921 | EU | Food Beverage & Tobacco | 4,533 | 0.43 |
| 4661607 | EU | Utilities | 2,924 | 0.65 |
| 4635088 | EU | Telecommunication Services | 64 | 25.19 |
| 5699373 | EU | Capital Goods | 33 | 42.53 |
| 4943402 | EU | Materials | 29 | 37.39 |
| 4563640 | EU | Materials | 33 | 29.28 |
| 4359690 | EU | Transportation | 1,739 | 0.47 |
| 4719915 | EU | Materials | 13 | 58.64 |
| 4121305 | EU | Materials | 17 | 43.28 |
| 4921635 | EU | Capital Goods | 22 | 31.79 |
| 4119054 | EU | Commercial Services & Supplies | 11 | 45.53 |
| 5596593 | EU | Diversified Financials | 970 | 29.85 |
| 5150290 | EU | Banks | 65,808 | 0.3 |
| 4294791 | EU | Utilities | 843 | 17.54 |
| 4755317 | EU | Food Beverage & Tobacco | 37,895 | 0.23 |
| 7097328 | EU | Diversified Financials | 12,351 | 0.64 |
| 4497749 | EU | Banks | 401 | 18.15 |
| 4262118 | EU | Food & Drug Retailing | 12,497 | 0.57 |
| 5596991 | EU | Pharmaceuticals & Biotechnology | 15,468 | 0.42 |
| 4821100 | EU | Materials | 8,019 | 0.59 |
| 5689051 | EU | Consumer Durables & Apparel | 74 | 33.77 |
| 4005001 | EU | Materials | 129 | 13.29 |
| 5806225 | EU | Food & Drug Retailing | 39 | 40.4 |
| 5827431 | EU | Capital Goods | 85 | 13.62 |
| 5955279 | EU | Health Care Equipment & Service | 35 | 32.08 |
| 4247494 | EU | Retailing | 42 | 25.49 |
| 4704096 | EU | Technology Hardware & Equipment | 32 | 29.48 |
| 4221948 | EU | Transportation | 37 | 15.42 |
| 2583877 | CANADA | Technology Hardware & Equipment | 2,704 | 38.76 |
| 2754383 | CANADA | Banks | 11,661 | 3.55 |
| 2109723 | CANADA | Capital Goods | 31,514 | 1.02 |
| 2076281 | CANADA | Banks | 1,337 | 21.5 |
| 2076009 | CANADA | Banks | 64,941 | 0.44 |
| 2013200 | CANADA | Materials | 1,546 | 18.44 |
| 2492519 | CANADA | Insurance | 10,028 | 2.81 |
| 2177979 | CANADA | Transportation | 851 | 32.96 |

(continued)

| 2170525 | CANADA | Banks | 619 | 44.83 |
|---|---|---|---|---|
| 2566124 | CANADA | Insurance | 866 | 24.1 |
| 2263362 | CANADA | Technology Hardware & Equipment | 711 | 24.61 |
| 2180632 | CANADA | Transportation | 535 | 32.33 |
| 2012456 | CANADA | Energy | 579 | 26.87 |
| 2024644 | CANADA | Materials | 25,344 | 0.61 |
| 2089933 | CANADA | Telecommunication Services | 1,244 | 12.36 |
| 2889371 | CANADA | Media | 298 | 49.83 |
| 2861142 | CANADA | Energy | 415 | 33.7 |
| 2900904 | CANADA | Utilities | 511 | 25.14 |
| 2068299 | CANADA | Energy | 304 | 39.17 |
| 2554475 | CANADA | Automobiles & Components | 497 | 19.87 |
| 2508751 | CANADA | Insurance | 175 | 54.71 |
| 2098199 | CANADA | Pharmaceuticals & Biotechnology | 890 | 9.74 |
| 2454241 | CANADA | Energy | 209 | 41.29 |
| 2801836 | CANADA | Media | 1,040 | 8.12 |
| 2438007 | CANADA | Insurance | 949 | 8.87 |
| 2466149 | CANADA | Utilities | 143 | 57.67 |
| 2697701 | CANADA | Diversified Financials | 165 | 49.58 |
| 2691714 | CANADA | Materials | 242 | 33.74 |
| 2521800 | CANADA | Food & Drug Retailing | 980 | 8.32 |
| 2056807 | CANADA | Materials | 439 | 18.35 |
| 2171573 | CANADA | Energy | 158 | 50.65 |
| 2684316 | CANADA | Energy | 197 | 40.48 |
| 2460367 | CANADA | Materials | 208 | 36.9 |
| 2077303 | CANADA | Banks | 273 | 27.18 |
| 2956662 | CANADA | Food & Drug Retailing | 869 | 8.12 |
| 2395759 | CANADA | Energy | 448 | 15.6 |
| 2696980 | CANADA | Materials | 214 | 32.24 |
| 2072717 | CANADA | Capital Goods | 272 | 24.56 |
| 2901628 | CANADA | Utilities | 10,308 | 0.63 |
| 2032421 | CANADA | Energy | 111 | 58.03 |
| 2172219 | CANADA | Energy | 367 | 17.2 |
| 2697864 | CANADA | Diversified Financials | 3,458 | 1.74 |
| 2158877 | CANADA | Technology Hardware & Equipment | 334 | 18.01 |
| 2953953 | CANADA | Utilities | 236 | 25.28 |
| 2092599 | CANADA | Diversified Financials | 199 | 27.89 |
| 2716231 | CANADA | Media | 83 | 61.07 |
| 2437350 | CANADA | Real Estate | 212 | 23.69 |

(continued)

| 2381134 | CANADA | Telecommunication Services | 899 | 5.59 |
|---|---|---|---|---|
| 2699688 | CANADA | Energy | 269 | 17.94 |
| 2559696 | CANADA | Health Care Equipment & Service | 416 | 10.72 |
| 2259628 | CANADA | Materials | 301 | 14.5 |
| 2350651 | CANADA | Materials | 701 | 6.21 |
| 2802806 | CANADA | Energy | 165 | 25.7 |
| 2659518 | CANADA | Technology Hardware & Equipment | 234 | 17.87 |
| 2169051 | CANADA | Media | 80 | 50.26 |
| 2162760 | CANADA | Capital Goods | 161 | 24.06 |
| 2641322 | CANADA | Materials | 177 | 20.83 |
| 2208307 | CANADA | Software & Services | 195 | 18.23 |
| 2324418 | CANADA | Energy | 263 | 13.46 |
| 2566351 | CANADA | Insurance | 74 | 47.31 |
| 2469375 | CANADA | Diversified Financials | 56 | 60.35 |
| 2276304 | CANADA | Materials | 127 | 26.25 |
| 2740241 | CANADA | Energy | 104 | 32.04 |
| 2166160 | CANADA | Materials | 189 | 17.12 |
| 2715090 | CANADA | Pharmaceuticals & Biotechnology | 105 | 29.46 |
| 2000978 | CANADA | Technology Hardware & Equipment | 6,905 | 0.45 |
| 2680165 | CANADA | Energy | 5,841 | 0.53 |
| 2348935 | CANADA | Hotels Restaurants & Leisure | 61 | 50.25 |
| 2598581 | CANADA | Food Beverage & Tobacco | 58 | 52.81 |
| 2164863 | CANADA | Diversified Financials | 76 | 39.53 |
| 2129301 | CANADA | Real Estate | 461 | 6.53 |
| 2213538 | CANADA | Materials | 308 | 9.33 |
| 2275743 | CANADA | Materials | 111 | 25.54 |
| 2623836 | CANADA | Energy | 43 | 65.09 |
| 2743701 | CANADA | Capital Goods | 206 | 11.87 |
| 2172286 | CANADA | Retailing | 3,892 | 0.6 |
| 2879327 | CANADA | Materials | 72 | 31.64 |
| 2141941 | CANADA | Software & Services | 65 | 32.56 |
| 2352969 | CANADA | Materials | 44 | 46.71 |
| 2424512 | CANADA | Telecommunication Services | 40 | 52.11 |
| 2213066 | CANADA | Materials | 196 | 10.64 |
| 2159740 | CANADA | Software & Services | 60 | 32.94 |
| 2471660 | CANADA | Hotels Restaurants & Leisure | 7,865 | 0.24 |
| 2453260 | CANADA | Software & Services | 5,021 | 0.37 |
| 2442655 | CANADA | Retailing | 107 | 16.41 |
| 2715777 | CANADA | Media | 167 | 9.13 |

(continued)

| 4588825 | EU | Banks | 507 | 42.3 |
|---|---|---|---|---|
| 7077524 | EU | Pharmaceuticals & Biotechnology | 381 | 51.69 |
| 5964651 | EU | Capital Goods | 497 | 22.24 |
| 5698790 | EU | Telecommunication Services | 25,934 | 0.41 |
| 4501093 | EU | Technology Hardware & Equipment | 540 | 11.18 |
| 5952816 | EU | Commercial Services & Supplies | 221 | 24.18 |
| 4248754 | EU | Transportation | 566 | 8.61 |
| 4155586 | EU | Food Beverage & Tobacco | 21,514 | 0.21 |
| 4253048 | EU | Transportation | 92 | 47.72 |
| 7085259 | EU | Pharmaceuticals & Biotechnology | 267 | 15.43 |
| 5223459 | EU | Commercial Services & Supplies | 128 | 29.79 |
| 4658535 | EU | Materials | 42 | 56.59 |
| 5961544 | EU | Health Care Equipment & Service | 50 | 41.38 |
| 5705593 | EU | Capital Goods | 45 | 40.77 |
| 5797147 | EU | Insurance | 40 | 37.08 |
| 5867653 | EU | Health Care Equipment & Service | 72 | 20.53 |
| 4169219 | EU | Food Beverage & Tobacco | 69 | 18.27 |
| 4155285 | EU | Transportation | 4,703 | 0.24 |
| 5872969 | EU | Transportation | 90 | 12.44 |
| 5641125 | EU | Software & Services | 33 | 32.53 |
| 4297604 | EU | Retailing | 30 | 31.02 |
| 7106354 | EU | Capital Goods | 17 | 49.7 |
| 5796768 | EU | Real Estate | 33 | 24.72 |
| 5263574 | EU | Capital Goods | 135 | 5.73 |
| 4161293 | EU | Consumer Durables & Apparel | 32 | 21.94 |
| 5065811 | EU | Transportation | 22 | 24.55 |
| 5902941 | EU | Technology Hardware & Equipment | 871,463 | 0.39 |
| 5051252 | EU | Materials | 1,015 | 17.38 |
| 5072673 | EU | Materials | 452 | 35.5 |
| 5556586 | EU | Telecommunication Services | 252 | 31.54 |
| 5479702 | EU | Software & Services | 10,990 | 0.52 |
| 5226038 | EU | Insurance | 164 | 34.31 |
| 5713422 | EU | Capital Goods | 9,768 | 0.25 |
| 5579550 | EU | Energy | 42 | 42.73 |
| 5792528 | EU | Capital Goods | 4,261 | 0.42 |
| 4434166 | EU | Health Care Equipment & Service | 82 | 21.05 |
| 4525189 | EU | Capital Goods | 41 | 39.28 |
| 4665148 | EU | Materials | 324 | 4.62 |
| 5446944 | EU | Food Beverage & Tobacco | 58 | 23.49 |

(continued)

| 4622206 | EU | Pharmaceuticals & Biotechnology | 67 | 19.59 |
|---|---|---|---|---|
| 5232671 | EU | Capital Goods | 141 | 8.39 |
| 5831216 | EU | Software & Services | 2,395 | 0.48 |
| 4024006 | EU | Consumer Durables & Apparel | 3,680 | 0.3 |
| 5038824 | EU | Capital Goods | 22 | 45.2 |
| 4490005 | EU | Food & Drug Retailing | 24 | 38.78 |
| 4691949 | EU | Insurance | 21 | 37.65 |
| 4727662 | EU | Materials | 29 | 24.58 |
| 4905413 | EU | Energy | 64,320 | 3.26 |
| 4834777 | EU | Media | 13,456 | 10.03 |
| 4736817 | EU | Pharmaceuticals & Biotechnology | 5,030 | 22.66 |
| 7088429 | EU | Insurance | 411,947 | 0.23 |
| 5975006 | EU | Technology Hardware & Equipment | 3,074 | 26.72 |
| 4133667 | EU | Banks | 2,603 | 30.83 |
| 5641567 | EU | Food & Drug Retailing | 2,115 | 31.09 |
| 7118047 | EU | Utilities | 5,586 | 9.92 |
| 4057808 | EU | Household & Personal Products | 106,844 | 0.51 |
| 5671735 | EU | Pharmaceuticals & Biotechnology | 1,978 | 25.75 |
| 5176177 | EU | Telecommunication Services | 1,685 | 29.21 |
| 5962332 | EU | Technology Hardware & Equipment | 822 | 51.9 |
| 5966516 | EU | Banks | 1,668 | 24.4 |
| 5981810 | EU | Food Beverage & Tobacco | 900 | 41.39 |
| 4061412 | EU | Consumer Durables & Apparel | 18,042 | 1.69 |
| 4011406 | EU | Materials | 149,198 | 0.2 |
| 4163437 | EU | Software & Services | 843 | 33.88 |
| 4502706 | EU | Materials | 2,705 | 10.09 |
| 5505072 | EU | Retailing | 1,387 | 19.07 |
| 4768371 | EU | Capital Goods | 375 | 65.97 |
| 4683827 | EU | Automobiles & Components | 60,708 | 0.32 |
| 5852842 | EU | Hotels Restaurants & Leisure | 370 | 49.55 |
| 4834108 | EU | Capital Goods | 53,512 | 0.33 |
| 4547213 | EU | Media | 774 | 19.78 |
| 4712798 | EU | Automobiles & Components | 570 | 25.15 |
| 4002121 | EU | Telecommunication Services | 21,824 | 0.65 |
| 5474978 | EU | Capital Goods | 1,429 | 8.91 |
| 4012250 | EU | Capital Goods | 38,127 | 0.32 |
| 4588364 | EU | Automobiles & Components | 512 | 19.12 |
| 5997118 | EU | Media | 261 | 37.1 |
| 4179144 | EU | Retailing | 191 | 48.66 |

(continued)

| 7062713 | EU | Hotels Restaurants & Leisure | 478 | 18.91 |
|---|---|---|---|---|
| 5988930 | EU | Consumer Durables & Apparel | 327 | 26.86 |
| 4907732 | EU | Software & Services | 378 | 21.86 |
| 4943792 | EU | Materials | 846 | 9.54 |
| 4178419 | EU | Food & Drug Retailing | 194 | 38.24 |
| 4818083 | EU | Capital Goods | 408 | 17.28 |
| 4682329 | EU | Food Beverage & Tobacco | 243 | 28.09 |
| 4937579 | EU | Automobiles & Components | 538 | 12.53 |
| 4894544 | EU | Materials | 159 | 39.66 |
| 4303761 | EU | Health Care Equipment & Service | 89 | 67.48 |
| 4380429 | EU | Media | 209 | 27.38 |
| 4162791 | EU | Capital Goods | 318 | 16.9 |
| 4911346 | EU | Real Estate | 16,327 | 0.32 |
| 5876507 | EU | Software & Services | 121 | 38.2 |
| 5330047 | EU | Software & Services | 6,605 | 0.64 |
| 4874160 | EU | Capital Goods | 172 | 22.28 |
| 5654781 | EU | Software & Services | 155 | 24.46 |
| 4916039 | EU | Transportation | 64 | 49.88 |
| 5298781 | EU | Commercial Services & Supplies | 116 | 26.67 |
| 4181741 | EU | Energy | 58 | 51.97 |
| 4994693 | EU | Capital Goods | 121 | 17.36 |
| 4457765 | EU | Materials | 100 | 18.97 |
| 4074432 | EU | Technology Hardware & Equipment | 54 | 31.79 |
| 4204370 | EU | Hotels Restaurants & Leisure | 1,148 | 1.29 |
| 5727973 | EU | Capital Goods | 4,445 | 31.9 |
| 5529027 | EU | Automobiles & Components | 90,617 | 1.07 |
| 5750355 | EU | Banks | 11,804 | 7.65 |
| 5231485 | EU | Insurance | 6,405 | 13.15 |
| 4942904 | EU | Utilities | 2,902 | 23.24 |
| 5069211 | EU | Materials | 1,718 | 37.92 |
| 5842359 | EU | Telecommunication Services | 4,540 | 13.89 |
| 5086577 | EU | Materials | 7,034 | 7.68 |
| 5294121 | EU | Insurance | 8,430 | 5.92 |
| 4325419 | EU | Banks | 4,242 | 11.03 |
| 4846868 | EU | Software & Services | 2,564 | 16.35 |
| 5801628 | EU | Banks | 2,877 | 11.8 |
| 4768962 | EU | Utilities | 990 | 29.62 |
| 5497102 | EU | Automobiles & Components | 80,647 | 0.36 |
| 4846288 | EU | Software & Services | 116,824 | 0.21 |

(continued)

| 4845757 | EU | Pharmaceuticals & Biotechnology | 927 | 22.03 |
|---|---|---|---|---|
| 5889505 | EU | Technology Hardware & Equipment | 2,075 | 9.61 |
| 4617859 | EU | Transportation | 47,021 | 0.26 |
| 5041413 | EU | Retailing | 1,012 | 11.85 |
| 5636927 | EU | Materials | 522 | 21.77 |
| 5666292 | EU | Hotels Restaurants & Leisure | 1,659 | 6.03 |
| 5720284 | EU | Diversified Financials | 268 | 35.25 |
| 5740817 | EU | Capital Goods | 1,078 | 7.79 |
| 5287488 | EU | Transportation | 178 | 45.46 |
| 5497168 | EU | Automobiles & Components | 490 | 15.64 |
| 5732825 | EU | Pharmaceuticals & Biotechnology | 34,386 | 0 21 |
| 5785993 | EU | Technology Hardware & Equipment | 799 | 8.93 |
| 5107401 | EU | Household & Personal Products | 592 | 11.97 |
| 7101069 | EU | Automobiles & Components | 482 | 13.35 |
| 5273131 | EU | Pharmaceuticals & Biotechnology | 148 | 38.12 |
| 5129074 | EU | Health Care Equipment & Service | 144 | 38.77 |
| 4031976 | EU | Consumer Durables & Apparel | 249 | 22.36 |
| 5468346 | EU | Technology Hardware & Equipment | 97 | 45.68 |
| 5563520 | EU | Capital Goods | 163 | 26.54 |
| 5604816 | EU | Diversified Financials | 223 | 17.17 |
| 4741844 | EU | Pharmaceuticals & Biotechnology | 20,646 | 0.18 |
| 4598589 | EU | Automobiles & Components | 550 | 5.91 |
| 4579131 | EU | Media | 208 | 13.9 |
| 5720273 | EU | Diversified Financials | 137 | 20.93 |
| 5120679 | EU | Materials | 240 | 11.38 |
| 5786565 | EU | Retailing | 158 | 17.15 |
| 5160073 | EU | Health Care Equipment & Service | 116 | 22 78 |
| 4769147 | EU | Utilities | 155 | 16.37 |
| 7021963 | EU | Diversified Financials | 148 | 15.93 |
| 5105182 | EU | Health Care Equipment & Service | 501 | 4.65 |
| 4755135 | EU | Software & Services | 87 | 26.33 |
| 5733486 | EU | Capital Goods | 11,501 | 0.19 |
| 5728567 | EU | Household & Personal Products | 56 | 37.62 |
| 5563531 | EU | Capital Goods | 41 | 50.82 |
| 5726709 | EU | Consumer Durables & Apparel | 45 | 40.47 |
| 4818351 | EU | Materials | 37 | 45.45 |
| 5437078 | EU | Food Beverage & Tobacco | 109 | 14.26 |
| 4596680 | EU | Retailing | 61 | 20.64 |
| 4625959 | EU | Banks | 28,227 | 0.53 |

(continued)

| | | | | |
|---|---|---|---|---|
| 4235864 | EU | Banks | 261 | 32.28 |
| 5051605 | EU | Telecommunication Services | 20,189 | 0.4 |
| 4212823 | EU | Banks | 16,170 | 0.44 |
| 5654316 | EU | Banks | 7,519 | 0.59 |
| 4122676 | EU | Banks | 6,974 | 0.47 |
| 4420723 | EU | Food Beverage & Tobacco | 13,463 | 0.22 |
| 5560349 | EU | Telecommunication Services | 127 | 19.9 |
| 4888280 | EU | Materials | 113 | 19.93 |
| 5482023 | EU | Technology Hardware & Equipment | 699 | 3.1 |
| 4934611 | EU | Materials | 7,978 | 0.24 |
| 5475658 | EU | Energy | 135 | 12.13 |
| 4051446 | EU | Transportation | 15 | 59.83 |
| 4205351 | EU | Capital Goods | 65 | 13.58 |
| 4026778 | EU | Materials | 20 | 35.63 |
| 5704608 | EU | Insurance | 30 | 22.68 |
| 5440247 | EU | Retailing | 195 | 3.54 |
| 5560811 | EU | Media | 54 | 11.93 |
| 5340251 | EU | Consumer Durables & Apparel | 12 | 49.94 |
| 7054129 | EU | Materials | 992 | 0.57 |
| 5860191 | EU | Utilities | 33 | 16.25 |
| 4888161 | EU | Capital Goods | 37 | 14.26 |
| 4347770 | EU | Consumer Durables & Apparel | 15 | 33.7 |
| 4930738 | EU | Food Beverage & Tobacco | 16 | 29.81 |
| 6448068 | HONG KONG | Industrial Conglomerates | 3,422 | 15.78 |
| 6190273 | HONG KONG | Real Estate | 9,399 | 4.35 |
| 6859927 | HONG KONG | Real Estate | 81,992 | 0.36 |
| 6408374 | HONG KONG | Banks | 876 | 22.93 |
| 6097017 | HONG KONG | Utilities | 3,202 | 5.52 |
| 6867748 | HONG KONG | Diversified Financials | 289 | 40.31 |
| 6435327 | HONG KONG | Utilities | 37,613 | 0.29 |
| 6436557 | HONG KONG | Utilities | 525 | 19.35 |
| 6075648 | HONG KONG | Banks | 23,170 | 0.32 |
| 6281939 | HONG KONG | Capital Goods | 5,574 | 1.33 |
| 6164007 | HONG KONG | Telecommunication Services | 366 | 19.06 |
| 6286257 | HONG KONG | Retailing | 29,925 | 0.23 |
| 6435576 | HONG KONG | Multi-Sector Holdings | 136 | 49.89 |
| 6420538 | HONG KONG | Real Estate | 180 | 36 31 |
| 6290054 | HONG KONG | Transportation | 117 | 42.62 |
| 6267359 | HONG KONG | Diversified Financials | 182 | 23.46 |

(continued)

| 6633767 | HONG KONG | Real Estate | 121 | 34.2 |
|---|---|---|---|---|
| 6179755 | HONG KONG | Transportation | 76 | 43.41 |
| 6030506 | HONG KONG | Real Estate | 7,177 | 0.42 |
| 6881674 | HONG KONG | Media | 166 | 14.27 |
| 6771032 | HONG KONG | Hotels Restaurants & Leisure | 41 | 51.54 |
| 6449629 | HONG KONG | Real Estate | 32 | 61.21 |
| 6282040 | HONG KONG | Retailing | 43 | 43.65 |
| 6824657 | HONG KONG | Media | 109 | 15.59 |
| 6212553 | HONG KONG | Materials | 99 | 16.64 |
| 6810429 | HONG KONG | Real Estate | 120 | 12.19 |
| 6321642 | HONG KONG | Retailing | 81 | 17.18 |
| 6002453 | HONG KONG | Technology Hardware & Equipment | 21 | 33.73 |
| 4305507 | EU | Pharmaceuticals & Biotechnology | 1,345 | 28.56 |
| 4020684 | EU | Banks | 87,625 | 0.27 |
| 5728169 | EU | Banks | 341 | 65.12 |
| 4182249 | EU | Materials | 1,270 | 16.15 |
| 4455253 | EU | Insurance | 270 | 27.47 |
| 5728415 | EU | Telecommunication Services | 124 | 50.6 |
| 5914452 | EU | Transportation | 11,821 | 0.48 |
| 4816151 | EU | Materials | 352 | 11.89 |
| 4519579 | EU | Food Beverage & Tobacco | 172 | 16.23 |
| 4699103 | EU | Media | 87 | 22.92 |
| 4189477 | EU | Capital Goods | 80 | 20.91 |
| 4388694 | EU | Real Estate | 3,805 | 0.4 |
| 226185 | EU | Software & Services | 59 | 24.78 |
| 4942636 | EU | Consumer Durables & Apparel | 31 | 45.44 |
| 5013832 | EU | Food Beverage & Tobacco | 22 | 43.51 |
| 4436399 | EU | Energy | 358,862 | 0.23 |
| 4056719 | EU | Insurance | 2,032 | 34.28 |
| 4876746 | EU | Telecommunication Services | 1,249 | 45.34 |
| 5297506 | EU | Telecommunication Services | 1,642 | 33.27 |
| 4232445 | EU | Banks | 914 | 35.27 |
| 4076836 | EU | Banks | 1,198 | 25.97 |
| 5798021 | EU | Utilities | 82,476 | 0.37 |
| 5297313 | EU | Telecommunication Services | 681 | 40.27 |
| 5556575 | EU | Banks | 2,709 | 9.96 |
| 5077946 | EU | Media | 24,410 | 0.59 |
| 5975062 | EU | Diversified Financials | 263 | 51.73 |
| 5748521 | EU | Automobiles & Components | 880 | 14.2 |

(continued)

| | | | | |
|---|---|---|---|---|
| 4574813 | EU | Banks | 266 | 46.79 |
| 5554654 | EU | Transportation | 294 | 40.23 |
| 5528604 | EU | Banks | 1,170 | 9.58 |
| 4718246 | EU | Insurance | 3,366 | 3.3 |
| 5843642 | EU | Media | 27,094 | 0.4 |
| 4015970 | EU | Insurance | 14,803 | 0.53 |
| 4079631 | EU | Diversified Financials | 170 | 42.37 |
| 5699544 | EU | Banks | 1,136 | 6.19 |
| 4058351 | EU | Banks | 147 | 47.38 |
| 4689900 | EU | Capital Goods | 221 | 28.78 |
| 5535198 | EU | Diversified Financials | 470 | 12.37 |
| 4764465 | EU | Utilities | 396 | 13.72 |
| 4800659 | EU | Health Care Equipment & Service | 152 | 30.74 |
| 4076847 | EU | Banks | 9,995 | 0.43 |
| 5953529 | EU | Software & Services | 189 | 21.45 |
| 5256477 | EU | Consumer Durables & Apparel | 210 | 16.3 |
| 5748554 | EU | Automobiles & Components | 84 | 39.85 |
| 4884073 | EU | Utilities | 163 | 20.44 |
| 5256206 | EU | Hotels Restaurants & Leisure | 90 | 32.33 |
| 4072168 | EU | Banks | 51 | 56.09 |
| 4084895 | EU | Media | 138 | 19.41 |
| 5140343 | EU | Transportation | 86 | 29.55 |
| 4714404 | EU | Food Beverage & Tobacco | 96 | 26.1 |
| 5748532 | EU | Automobiles & Components | 3,186 | 0.78 |
| 5486672 | EU | Consumer Durables & Apparel | 605 | 3.54 |
| 5935356 | EU | Telecommunication Services | 78 | 27.11 |
| 5728125 | EU | Utilities | 193 | 10.6 |
| 5836200 | EU | Media | 34 | 53.59 |
| 5975932 | EU | Materials | 49 | 31.11 |
| 4457594 | EU | Materials | 282 | 5.19 |
| 4740034 | EU | Food & Drug Retailing | 49 | 23.78 |
| 6900643 | JAPAN | Automobiles & Components | 5,629 | 30.03 |
| 6129277 | JAPAN | Telecommunication Services | 19,104 | 8.54 |
| 6821506 | JAPAN | Consumer Durables & Apparel | 605,760 | 0.25 |
| 6643108 | JAPAN | Diversified Financials | 2,574 | 33.92 |
| 6870445 | JAPAN | Pharmaceuticals & Biotechnology | 3,100 | 27.81 |
| 6335171 | JAPAN | Banks | 13,055 | 6.08 |
| 6172323 | JAPAN | Technology Hardware & Equipment | 5,878 | 13.25 |
| 6572707 | JAPAN | Consumer Durables & Apparel | 6,429 | 11.52 |

(continued)

| | | | | |
|---|---|---|---|---|
| 6286280 | JAPAN | Banks | 2,746 | 24.9 |
| 6858526 | JAPAN | Banks | 996 | 62.18 |
| 6895404 | JAPAN | Utilities | 6,050 | 10.17 |
| 6429104 | JAPAN | Technology Hardware & Equipment | 5,233 | 11.27 |
| 6435145 | JAPAN | Automobiles & Components | 5,630 | 10.36 |
| 6640400 | JAPAN | Technology Hardware & Equipment | 3,176 | 18.27 |
| 6356945 | JAPAN | Technology Hardware & Equipment | 873 | 58.2 |
| 6641373 | JAPAN | Telecommunication Services | 170,761 | 0.29 |
| 6610403 | JAPAN | Technology Hardware & Equipment | 3,337 | 14.52 |
| 6747204 | JAPAN | Technology Hardware & Equipment | 4,189 | 10.32 |
| 6797179 | JAPAN | Food & Drug Retailing | 3,200 | 13.23 |
| 6467944 | JAPAN | Retailing | 562 | 72.3 |
| 6897217 | JAPAN | Technology Hardware & Equipment | 1,962 | 20 15 |
| 6356525 | JAPAN | Consumer Durables & Apparel | 4,583 | 8.6 |
| 6335223 | JAPAN | Banks | 1,313 | 28.18 |
| 6639550 | JAPAN | Consumer Durables & Apparel | 1,484 | 24.55 |
| 6298542 | JAPAN | Transportation | 1,257 | 27.79 |
| 6642860 | JAPAN | Automobiles & Components | 555 | 61.07 |
| 6499260 | JAPAN | Technology Hardware & Equipment | 1,455 | 23.2 |
| 6804585 | JAPAN | Materials | 12,177 | 2.74 |
| 6483809 | JAPAN | Household & Personal Products | 1,161 | 27.6 |
| 6251448 | JAPAN | Diversified Financial | 3,256 | 9.54 |
| 6800602 | JAPAN | Consumer Durables & Apparel | 1,125 | 24.82 |
| 6597067 | JAPAN | Capital Goods | 1,474 | 18.79 |
| 6738220 | JAPAN | Technology Hardware & Equipment | 1,592 | 17.17 |
| 6791591 | JAPAN | Commercial Services & Supplies | 523 | 51.45 |
| 6640284 | JAPAN | Diversified Financials | 74,916 | 0.35 |
| 6894768 | JAPAN | Insurance | 151,515 | 0.17 |
| 6483489 | JAPAN | Utilities | 1,380 | 18.49 |
| 6895675 | JAPAN | Technology Hardware & Equipment | 936 | 26.88 |
| 6195609 | JAPAN | Utilities | 94,778 | 0.26 |
| 6642569 | JAPAN | Materials | 724 | 31.42 |
| 6597045 | JAPAN | Capital Goods | 41,721 | 0.54 |
| 6776769 | JAPAN | Consumer Durables & Apparel | 96,800 | 0.23 |
| 6640381 | JAPAN | Automobiles & Components | 2,426 | 8.26 |
| 6985383 | JAPAN | Pharmaceuticals & Biotechnology | 1,066 | 18.56 |
| 6125639 | JAPAN | Software & Services | 1,194 | 16.26 |
| 6596729 | JAPAN | Real Estate | 6,048 | 3.1 |
| 6250906 | JAPAN | Commercial Services & Supplies | 1,939 | 9.63 |

(continued)

| 6870490 | JAPAN | Technology Hardware & Equipment | 895 | 20.84 |
|---|---|---|---|---|
| 6132101 | JAPAN | Automobiles & Components | 41,348 | 0.44 |
| 6985565 | JAPAN | Transportation | 5,348 | 3.32 |
| 6441506 | JAPAN | Technology Hardware & Equipment | 440 | 39.68 |
| 6596785 | JAPAN | Capital Goods | 38,652 | 0.45 |
| 6661144 | JAPAN | Diversified Financials | 3,528 | 4.81 |
| 6770620 | JAPAN | Software & Services | 416 | 38.86 |
| 6597302 | JAPAN | Capital Goods | 1,128 | 14.24 |
| 6869302 | JAPAN | Technology Hardware & Equipment | 293 | 54.06 |
| 6895448 | JAPAN | Utilities | 2,366 | 6.69 |
| 6775283 | JAPAN | Pharmaceuticals & Biotechnology | 403 | 38.45 |
| 6858708 | JAPAN | Capital Goods | 347 | 44.41 |
| 6597603 | JAPAN | Real Estate | 25,623 | 0.6 |
| 6055208 | JAPAN | Capital Goods | 418 | 36.28 |
| 6641403 | JAPAN | Energy | 206 | 73.02 |
| 6493745 | JAPAN | Food Beverage & Tobacco | 742 | 20.25 |
| 6876067 | JAPAN | Diversified Financials | 872 | 16.93 |
| 6490995 | JAPAN | Technology Hardware & Equipment | 5,626 | 2.56 |
| 6356934 | JAPAN | Capital Goods | 445 | 32.12 |
| 6897024 | JAPAN | Media | 33,207 | 0.43 |
| 6895266 | JAPAN | Utilities | 1,134 | 12.4 |
| 6054603 | JAPAN | Materials | 513 | 27.05 |
| 6307200 | JAPAN | Pharmaceuticals & Biotechnology | 1,160 | 11.69 |
| 6661768 | JAPAN | Utilities | 843 | 16.06 |
| 6499806 | JAPAN | Utilities | 345 | 38.42 |
| 6332439 | JAPAN | Retailing | 32,400 | 0.41 |
| 6859002 | JAPAN | Diversified Financials | 867 | 15.28 |
| 6763965 | JAPAN | Capital Goods | 645 | 20.04 |
| 6010906 | JAPAN | Food Beverage & Tobacco | 244 | 52.48 |
| 6492968 | JAPAN | Transportation | 2,712 | 4.72 |
| 6499367 | JAPAN | Banks | 303 | 41.73 |
| 6805328 | JAPAN | Banks | 1,057 | 11.86 |
| 6703295 | JAPAN | Diversified Financials | 435 | 28.56 |
| 6183552 | JAPAN | Transportation | 613 | 20.11 |
| 6858560 | JAPAN | Materials | 348 | 34.75 |
| 6357562 | JAPAN | Capital Goods | 401 | 29.77 |
| 6897143 | JAPAN | Materials | 575 | 20.51 |
| 6334781 | JAPAN | Materials | 2,210 | 5.3 |
| 6467803 | JAPAN | Capital Goods | 346 | 33.07 |

(continued)

| 6572666 | JAPAN | Technology Hardware & Equipment | 294 | 38.6 |
|---|---|---|---|---|
| 6480048 | JAPAN | Retailing | 427 | 26.41 |
| 6597001 | JAPAN | Materials | 242 | 46.29 |
| 6250218 | JAPAN | Pharmaceuticals & Biotechnology | 20,814 | 0.54 |
| 6572729 | JAPAN | Capital Goods | 707 | 15.8 |
| 6049784 | JAPAN | Diversified Financials | 488 | 22.72 |
| 6804682 | JAPAN | Pharmaceuticals & Biotechnology | 20,343 | 0.54 |
| 6896548 | JAPAN | Transportation | 313 | 34.89 |
| 6688745 | JAPAN | Consumer Durables & Apparel | 276 | 39.48 |
| 6957995 | JAPAN | Transportation | 904 | 12.02 |
| 6141680 | JAPAN | Software & Services | 27,801 | 0.39 |
| 6858946 | JAPAN | Capital Goods | 584 | 18.2 |
| 6474535 | JAPAN | Food Beverage & Tobacco | 227 | 46.32 |
| 6986063 | JAPAN | Insurance | 791 | 12.71 |
| 6569527 | JAPAN | Retailing | 934 | 10.59 |
| 6496584 | JAPAN | Capital Goods | 500 | 19.49 |
| 6496681 | JAPAN | Software & Services | 1,186 | 8.1 |
| 6793906 | JAPAN | Consumer Durables & Apparel | 507 | 18.55 |
| 6659428 | JAPAN | Technology Hardware & Equipment | 16,602 | 0.56 |
| 6054409 | JAPAN | Food Beverage & Tobacco | 253 | 36.45 |
| 6125286 | JAPAN | Software & Services | 31,715 | 0.29 |
| 6356804 | JAPAN | Pharmaceuticals & Biotechnology | 236 | 38.77 |
| 6643960 | JAPAN | Transportation | 225 | 40.3 |
| 6641801 | JAPAN | Capital Goods | 255 | 35.48 |
| 6880507 | JAPAN | Materials | 1,328 | 6.75 |
| 6986449 | JAPAN | Banks | 313 | 27.48 |
| 6642127 | JAPAN | Transportation | 274 | 31 |
| 6657701 | JAPAN | Materials | 287 | 28.94 |
| 6251363 | JAPAN | Consumer Durables & Apparel | 780 | 10.42 |
| 6870122 | JAPAN | Insurance | 1,510 | 5.35 |
| 6805265 | JAPAN | Household & Personal Products | 23,637 | 0.34 |
| 6870144 | JAPAN | Pharmaceuticals & Biotechnology | 178 | 44.53 |
| 6858786 | JAPAN | Insurance | 655 | 11.84 |
| 6019419 | JAPAN | Diversified Financials | 310 | 24.59 |
| 6597346 | JAPAN | Materials | 250 | 29.71 |
| 6619507 | JAPAN | Capital Goods | 736 | 9.93 |
| 6642321 | JAPAN | Technology Hardware & Equipment | 293 | 24.81 |
| 6200194 | JAPAN | Software & Services | 494 | 14.48 |
| 6497509 | JAPAN | Capital Goods | 181 | 39.43 |

(continued)

| 6885074 | JAPAN | Health Care Equipment & Service | 242 | 29.37 |
|---|---|---|---|---|
| 6648891 | JAPAN | Hotels Restaurants & Leisure | 232 | 30.24 |
| 6640466 | JAPAN | Materials | 343 | 20.35 |
| 6551030 | JAPAN | Capital Goods | 184 | 36.68 |
| 6196408 | JAPAN | Pharmaceuticals & Biotechnology | 723 | 9.35 |
| 6870564 | JAPAN | Technology Hardware & Equipment | 134 | 49.71 |
| 6900546 | JAPAN | Automobiles & Components | 1,116 | 5.83 |
| 6484664 | JAPAN | Materials | 474 | 13.53 |
| 6641447 | JAPAN | Capital Goods | 163 | 38.92 |
| 6487362 | JAPAN | Transportation | 21,110 | 0.3 |
| 6900212 | JAPAN | Capital Goods | 9,891 | 0.64 |
| 6656407 | JAPAN | Capital Goods | 228 | 27.55 |
| 6497662 | JAPAN | Materials | 227 | 27.29 |
| 6658801 | JAPAN | Health Care Equipment & Service | 2,607 | 2.37 |
| 6597368 | JAPAN | Materials | 87 | 69.44 |
| 6428725 | JAPAN | Technology Hardware & Equipment | 372 | 16.33 |
| 6250724 | JAPAN | Capital Goods | 226 | 26.63 |
| 6121927 | JAPAN | Commercial Services & Supplies | 2,744 | 2.16 |
| 6642406 | JAPAN | Capital Goods | 7,543 | 0.77 |
| 6466985 | JAPAN | Capital Goods | 279 | 20.8 |
| 6813161 | JAPAN | Hotels Restaurants & Leisure | 415 | 13.91 |
| 6657682 | JAPAN | Technology Hardware & Equipment | 142 | 40.07 |
| 6077309 | JAPAN | Pharmaceuticals & Biotechnology | 12,974 | 0.43 |
| 6569464 | JAPAN | Capital Goods | 352 | 15.7 |
| 6591809 | JAPAN | Diversified Financials | 277 | 19.87 |
| 6302700 | JAPAN | Capital Goods | 159 | 34.48 |
| 6190563 | JAPAN | Banks | 197 | 27.34 |
| 6900267 | JAPAN | Materials | 202 | 26.49 |
| 6870382 | JAPAN | Food Beverage & Tobacco | 736 | 7.21 |
| 6356707 | JAPAN | Capital Goods | 427 | 12.39 |
| 6895169 | JAPAN | Transportation | 484 | 10.75 |
| 6366007 | JAPAN | Energy | 742 | 6.99 |
| 6597089 | JAPAN | Materials | 767 | 6.75 |
| 6479767 | JAPAN | Banks | 344 | 14.83 |
| 6471871 | JAPAN | Transportation | 115 | 44.16 |
| 6641544 | JAPAN | Capital Goods | 177 | 28.58 |
| 6897466 | JAPAN | Capital Goods | 298 | 16.99 |
| 6986427 | JAPAN | Technology Hardware & Equipment | 344 | 14.63 |
| 6266914 | JAPAN | Food & Drug Retailing | 185 | 27.21 |

(continued)

| | | | | |
|---|---|---|---|---|
| 6481320 | JAPAN | Capital Goods | 11,160 | 0.45 |
| 6858827 | JAPAN | Materials | 97 | 51.36 |
| 6869131 | JAPAN | Capital Goods | 258 | 19.02 |
| 6075693 | JAPAN | Banks | 1,282 | 3.81 |
| 6804400 | JAPAN | Capital Goods | 7,679 | 0.62 |
| 6215552 | JAPAN | Software & Services | 131 | 35.63 |
| 6499550 | JAPAN | Pharmaceuticals & Biotechnology | 98 | 45.9 |
| 6014908 | JAPAN | Transportation | 8,654 | 0.51 |
| 6858849 | JAPAN | Materials | 75 | 57.66 |
| 6870100 | JAPAN | Capital Goods | 79 | 54.63 |
| 6804165 | JAPAN | Banks | 123 | 34.69 |
| 6021500 | JAPAN | Technology Hardware & Equipment | 77 | 55.21 |
| 6483360 | JAPAN | Materials | 590 | 7.08 |
| 6251341 | JAPAN | Banks | 168 | 24.67 |
| 6640767 | JAPAN | Food Beverage & Tobacco | 133 | 31.29 |
| 6484620 | JAPAN | Capital Goods | 186 | 22.25 |
| 6197304 | JAPAN | Consumer Durables & Apparel | 329 | 12.58 |
| 6870401 | JAPAN | Retailing | 444 | 9.33 |
| 6858902 | JAPAN | Real Estate | 113 | 36.24 |
| 6660204 | JAPAN | Materials | 298 | 13.57 |
| 6250821 | JAPAN | Materials | 435 | 9.22 |
| 6791955 | JAPAN | Consumer Durables & Apparel | 475 | 8.41 |
| 6641209 | JAPAN | Energy | 109 | 36.5 |
| 6496700 | JAPAN | Consumer Durables & Apparel | 249 | 15.97 |
| 6911485 | JAPAN | Household & Personal Products | 109 | 36.32 |
| 6597164 | JAPAN | Materials | 1,879 | 2.11 |
| 6487306 | JAPAN | Transportation | 121 | 32.54 |
| 6640682 | JAPAN | Technology Hardware & Equipment | 91 | 43.14 |
| 6985026 | JAPAN | Retailing | 6,637 | 0.59 |
| 6597584 | JAPAN | Transportation | 63 | 60.96 |
| 6918981 | JAPAN | Capital Goods | 1,123 | 3.39 |
| 6641760 | JAPAN | Food Beverage & Tobacco | 68 | 55.3 |
| 6398088 | JAPAN | Banks | 648 | 5.84 |
| 6895200 | JAPAN | Media | 125 | 30.27 |
| 6466844 | JAPAN | Retailing | 130 | 28.85 |
| 6805469 | JAPAN | Materials | 92 | 40.31 |
| 6985112 | JAPAN | Food Beverage & Tobacco | 98 | 37.83 |
| 6910705 | JAPAN | Capital Goods | 118 | 31.32 |
| 6357001 | JAPAN | Software & Services | 747 | 4.92 |

(continued)

| 6864329 | JAPAN | Banks | 288 | 12.75 |
|---|---|---|---|---|
| 6642473 | JAPAN | Capital Goods | 161 | 22.79 |
| 6793821 | JAPAN | Consumer Durables & Apparel | 111 | 32.87 |
| 6576185 | JAPAN | Food Beverage & Tobacco | 259 | 14 |
| 6455789 | JAPAN | Food Beverage & Tobacco | 66 | 54.48 |
| 6597487 | JAPAN | Retailing | 213 | 16.94 |
| 6473468 | JAPAN | Capital Goods | 142 | 25.06 |
| 6619604 | JAPAN | Automobiles & Components | 145 | 24.21 |
| 6036582 | JAPAN | Media | 337 | 10.44 |
| 6642387 | JAPAN | Consumer Durables & Apparel | 60 | 57.46 |
| 6044109 | JAPAN | Technology Hardware & Equipment | 10,421 | 0.33 |
| 6356365 | JAPAN | Capital Goods | 211 | 16.18 |
| 6250508 | JAPAN | Capital Goods | 129 | 26.16 |
| 6918624 | JAPAN | Retailing | 706 | 4.63 |
| 6841106 | JAPAN | Automobiles & Components | 10,918 | 0.29 |
| 6858504 | JAPAN | Materials | 113 | 27.43 |
| 6597409 | JAPAN | Technology Hardware & Equipment | 64 | 48.17 |
| 6497963 | JAPAN | Capital Goods | 278 | 11.1 |
| 6309820 | JAPAN | Materials | 97 | 31.83 |
| 6036548 | JAPAN | Software & Services | 70 | 43.94 |
| 6639602 | JAPAN | Software & Services | 74 | 41.37 |
| 6900289 | JAPAN | Materials | 11,786 | 0.26 |
| 6178967 | JAPAN | Consumer Durables & Apparel | 77 | 39.52 |
| 6640961 | JAPAN | Food Beverage & Tobacco | 180 | 16.64 |
| 6483241 | JAPAN | Household & Personal Products | 5,593 | 0.53 |
| 6429502 | JAPAN | Software & Services | 127 | 22.93 |
| 6900502 | JAPAN | Consumer Durables & Apparel | 325 | 8.58 |
| 6037734 | JAPAN | Diversified Financials | 125 | 21.99 |
| 6804820 | JAPAN | Consumer Durables & Apparel | 789 | 3.48 |
| 6007395 | JAPAN | Household & Personal Products | 92 | 29.7 |
| 6576356 | JAPAN | Software & Services | 63 | 43.17 |
| 6429148 | JAPAN | Capital Goods | 6,201 | 0.43 |
| 6470986 | JAPAN | Materials | 93 | 28.53 |
| 6196840 | JAPAN | Diversified Financials | 69 | 37.74 |
| 6331276 | JAPAN | Food & Drug Retailing | 5,538 | 0.47 |
| 6022105 | JAPAN | Capital Goods | 161 | 16.05 |
| 6461504 | JAPAN | Capital Goods | 293 | 8.78 |
| 6651189 | JAPAN | Capital Goods | 15,957 | 0.16 |
| 6136749 | JAPAN | Software & Services | 4,966 | 0.51 |

(continued)

| 6100056 | JAPAN | Commercial Services & Supplies | 123 | 20.46 |
|---|---|---|---|---|
| 6900557 | JAPAN | Automobiles & Components | 54 | 46.26 |
| 6173694 | JAPAN | Software & Services | 112 | 22.28 |
| 6880905 | JAPAN | Energy | 68 | 36.33 |
| 6858548 | JAPAN | Materials | 123 | 20.08 |
| 6641588 | JAPAN | Materials | 63 | 39.03 |
| 6596923 | JAPAN | Materials | 65 | 36.77 |
| 6496506 | JAPAN | Commercial Services & Supplies | 09 | 21.68 |
| 6484244 | JAPAN | Food Beverage & Tobacco | 80 | 29.29 |
| 6977971 | JAPAN | Consumer Durables & Apparel | 70 | 33.04 |
| 6249982 | JAPAN | Retailing | 60 | 38 5 |
| 6490809 | JAPAN | Food Beverage & Tobacco | 3,577 | 0.64 |
| 6640864 | JAPAN | Food Beverage & Tobacco | 7,739 | 0.29 |
| 6804035 | JAPAN | Retailing | 204 | 11 |
| 6597380 | JAPAN | Capital Goods | 39 | 55.92 |
| 6865560 | JAPAN | Health Care Equipment & Service | 57 | 36.98 |
| 6985264 | JAPAN | Automobiles & Components | 381 | 5.57 |
| 6356592 | JAPAN | Capital Goods | 163 | 12.94 |
| 6932204 | JAPAN | Consumer Durables & Apparel | 70 | 29.83 |
| 6899774 | JAPAN | Software & Services | 231 | 9.08 |
| 6433161 | JAPAN | Banks | 157 | 13.21 |
| 6714509 | JAPAN | Food Beverage & Tobacco | 51 | 39.99 |
| 6163286 | JAPAN | Food Beverage & Tobacco | 13,629 | 0.15 |
| 6250768 | JAPAN | Retailing | 343 | 5.96 |
| 6576088 | JAPAN | Food Beverage & Tobacco | 133 | 15.25 |
| 6492924 | JAPAN | Capital Goods | 85 | 23.68 |
| 6985509 | JAPAN | Food Beverage & Tobacco | 87 | 23.06 |
| 6596848 | JAPAN | Transportation | 6,463 | 0.31 |
| 6896645 | JAPAN | Consumer Durables & Apparel | 92 | 21.57 |
| 6483821 | JAPAN | Consumer Durables & Apparel | 57 | 34.67 |
| 6640983 | JAPAN | Capital Goods | 141 | 14 |
| 6640541 | JAPAN | Materials | 78 | 25.12 |
| 6894166 | JAPAN | Media | 81 | 24.24 |
| 6429308 | JAPAN | Capital Goods | 4,424 | 0.44 |
| 6127130 | JAPAN | Software & Services | 82 | 23.52 |
| 6818401 | JAPAN | Food Beverage & Tobacco | 173 | 11.01 |
| 6484686 | JAPAN | Transportation | 131 | 14.46 |
| 6045878 | JAPAN | Retailing | 4,560 | 0.41 |
| 6250542 | JAPAN | Materials | 42 | 43.93 |

(continued)

| | | | | |
|---|---|---|---|---|
| 6805544 | JAPAN | Energy | 81 | 22.73 |
| 6776907 | JAPAN | Food Beverage & Tobacco | 273 | 6.7 |
| 6278306 | JAPAN | Materials | 228 | 8 |
| 6667205 | JAPAN | Retailing | 34 | 52.59 |
| 6620941 | JAPAN | Hotels Restaurants & Leisure | 38 | 46.57 |
| 6129073 | JAPAN | Media | 7,733 | 0.23 |
| 6893884 | JAPAN | Capital Goods | 2,768 | 0.63 |
| 6657808 | JAPAN | Capital Goods | 167 | 10.33 |
| 6056052 | JAPAN | Media | 34 | 50.66 |
| 6398709 | JAPAN | Consumer Durables & Apparel | 63 | 27.05 |
| 6056977 | JAPAN | Banks | 197 | 8.53 |
| 6642923 | JAPAN | Consumer Durables & Apparel | 37 | 44.31 |
| 6482668 | JAPAN | Transportation | 279 | 5.94 |
| 6900955 | JAPAN | Commercial Services & Supplies | 438 | 3.78 |
| 6640422 | JAPAN | Materials | 61 | 27.13 |
| 6111779 | JAPAN | Hotels Restaurants & Leisure | 2,835 | 0.58 |
| 6496658 | JAPAN | Capital Goods | 58 | 27.87 |
| 6555805 | JAPAN | Consumer Durables & Apparel | 157 | 10.12 |
| 6251028 | JAPAN | Technology Hardware & Equipment | 25 | 62.12 |
| 6440503 | JAPAN | Food Beverage & Tobacco | 125 | 12.71 |
| 6858731 | JAPAN | Capital Goods | 40 | 39.23 |
| 6428305 | JAPAN | Capital Goods | 76 | 20.63 |
| 6049632 | JAPAN | Food Beverage & Tobacco | 2,553 | 0.62 |
| 6776349 | JAPAN | Consumer Durables & Apparel | 55 | 27.4 |
| 6499420 | JAPAN | Capital Goods | 108 | 13.96 |
| 6858861 | JAPAN | Materials | 3,026 | 0.49 |
| 6068422 | JAPAN | Retailing | 124 | 11.87 |
| 6481643 | JAPAN | Pharmaceuticals & Biotechnology | 447 | 3.18 |
| 6804455 | JAPAN | Retailing | 68 | 20.58 |
| 6466866 | JAPAN | Materials | 29 | 46.23 |
| 6641522 | JAPAN | Consumer Durables & Apparel | 40 | 33.13 |
| 6602563 | JAPAN | Capital Goods | 112 | 11.87 |
| 6914053 | JAPAN | Capital Goods | 2,248 | 0.59 |
| 6470588 | JAPAN | Materials | 26 | 49.41 |
| 6497082 | JAPAN | Capital Goods | 104 | 12.18 |
| 6027304 | JAPAN | Commercial Services & Supplies | 206 | 6.1 |
| 6775186 | JAPAN | Automobiles & Components | 53 | 22.89 |
| 6408705 | JAPAN | Retailing | 2,661 | 0.46 |
| 6793780 | JAPAN | Retailing | 90 | 13.5 |

(continued)

| 6870768 | JAPAN | Capital Goods | 33 | 31.24 |
|---|---|---|---|---|
| 6793423 | JAPAN | Transportation | 39 | 25.78 |
| 6250025 | JAPAN | Capital Goods | 17 | 57.35 |
| 6638449 | JAPAN | Retailing | 36 | 26.68 |
| 6597142 | JAPAN | Materials | 23 | 37.96 |
| 5202704 | EU | Energy | 8,634 | 33.1 |
| 5058877 | EU | Diversified Financials | 43,218 | 2.9 |
| 5986622 | EU | Consumer Durables & Apparel | 3,395 | 27.41 |
| 5927375 | EU | Insurance | 1,868 | 32.92 |
| 5640898 | EU | Food Beverage & Tobacco | 1,834 | 29.42 |
| 5252602 | EU | Food & Drug Retailing | 3,135 | 12.85 |
| 5250769 | EU | Banks | 1,572 | 23.35 |
| 5458314 | EU | Materials | 827 | 32.77 |
| 5949368 | EU | Technology Hardware & Equipment | 52,014 | 0.45 |
| 5956078 | EU | Telecommunication Services | 754 | 30.07 |
| 4148810 | EU | Media | 2,023 | 9.38 |
| 7108048 | EU | Food Beverage & Tobacco | 1,282 | 14.75 |
| 4970950 | EU | Media | 62,332 | 0.3 |
| 5481558 | EU | Transportation | 644 | 25.91 |
| 5671519 | EU | Media | 372 | 44.3 |
| 5402601 | EU | Food Beverage & Tobacco | 443 | 28.45 |
| 5209073 | EU | Capital Goods | 83 | 62.72 |
| 5516751 | EU | Commercial Services & Supplies | 205 | 16.55 |
| 5971424 | EU | Software & Services | 110 | 29.69 |
| 4441155 | EU | Capital Goods | 78 | 38.96 |
| 5931332 | EU | Media | 188 | 13.58 |
| 5562389 | EU | Retailing | 226 | 9.79 |
| 5446751 | EU | Technology Hardware & Equipment | 814 | 2 5 |
| 5205361 | EU | Commercial Services & Supplies | 216 | 6.99 |
| 5786491 | EU | Transportation | 146 | 6.87 |
| 6881436 | NEW ZEALAND | Telecommunication Services | 300 | 28.05 |
| 6178406 | NEW ZEALAND | Materials | 746 | 2 |
| 6939625 | NEW ZEALAND | Retailing | 22 | 48.94 |
| 6340250 | NEW ZEALAND | Consumer Durables & Apparel | 44 | 22.03 |
| 6152529 | NEW ZEALAND | Utilities | 18 | 52.94 |
| 6823193 | NEW ZEALAND | Hotels Restaurants & Leisure | 33 | 26.48 |
| 6123707 | NEW ZEALAND | Transportation | 51 | 16.65 |
| 6341606 | NEW ZEALAND | Capital Goods | 2,616 | 0.29 |
| 6111100 | NEW ZEALAND | Commercial Services & Supplies | 15 | 41.14 |

(continued)

| 6174299 | NEW ZEALAND | Insurance | 154 | 3.4 |
|---|---|---|---|---|
| 6462024 | NEW ZEALAND | Media | 101 | 5.16 |
| 6298865 | NEW ZEALAND | Materials | 132 | 3.45 |
| 6010768 | NEW ZEALAND | Transportation | 56 | 5.95 |
| 6342278 | NEW ZEALAND | Materials | 474 | 0.57 |
| 4645805 | EU | Capital Goods | 1,515 | 9.09 |
| 5459715 | EU | Food Beverage & Tobacco | 126 | 59.4 |
| 4730875 | EU | Capital Goods | 125 | 54.12 |
| 4732495 | EU | Telecommunication Services | 236 | 20.46 |
| 4263304 | EU | Banks | 169 | 26.77 |
| 4852832 | EU | Insurance | 176 | 16.7 |
| 7070396 | EU | Materials | 63 | 45.19 |
| 4848820 | EU | Banks | 437 | 6.23 |
| 5469372 | EU | Energy | 97 | 24.88 |
| 5561052 | EU | Transportation | 209 | 9.87 |
| 4502029 | EU | Capital Goods | 452 | 3.6 |
| 4100898 | EU | Transportation | 36 | 40.78 |
| 4719261 | EU | Technology Hardware & Equipment | 391 | 3.79 |
| 4310385 | EU | Materials | 145 | 10.18 |
| 5266045 | EU | Software & Services | 6,154 | 0.21 |
| 4790534 | EU | Media | 23 | 49.45 |
| 5034446 | EU | Technology Hardware & Equipment | 37 | 29.81 |
| 4153762 | EU | Food Beverage & Tobacco | 4,433 | 0.25 |
| 5457162 | EU | Software & Services | 21 | 46.7 |
| 5176694 | EU | Technology Hardware & Equipment | 223 | 4.15 |
| 5224678 | EU | Technology Hardware & Equipment | 16 | 52.43 |
| 4100906 | EU | Transportation | 1,344 | 0.61 |
| 4564665 | EU | Energy | 24 | 30.17 |
| 5066472 | EU | Transportation | 30 | 17.29 |
| 4587189 | EU | Energy | 28 | 15.6 |
| 5817186 | EU | Telecommunication Services | 588 | 35.64 |
| 5812493 | EU | Banks | 426 | 37.56 |
| 4103596 | EU | Utilities | 466 | 23.63 |
| 5803925 | EU | Transportation | 174 | 16.16 |
| 4175896 | EU | Materials | 143 | 19.12 |
| 4058061 | EU | Banks | 9,387 | 0.28 |
| 5721759 | EU | Diversified Financials | 190 | 12.01 |
| 5973992 | EU | Capital Goods | 102 | 17.99 |
| 5811412 | EU | Media | 51 | 17.18 |

(continued)

| 4477235 | EU | Food & Drug Retailing | 82 | 8.24 |
|---|---|---|---|---|
| 6175203 | SINGAPORE | Banks | 624 | 26.94 |
| 6663689 | SINGAPORE | Banks | 1,918 | 6.94 |
| 6916781 | SINGAPORE | Banks | 18,964 | 0.64 |
| 6811734 | SINGAPORE | Transportation | 970 | 9.57 |
| 6133966 | SINGAPORE | Media | 14,115 | 0.65 |
| 6810753 | SINGAPORE | Telecommunication Services | 237 | 34.62 |
| 6043214 | SINGAPORE | Capital Goods | 472 | 8.89 |
| 6180917 | SINGAPORE | Technology Hardware & Equipment | 77 | 52.82 |
| 6197928 | SINGAPORE | Real Estate | 247 | 14.49 |
| 6927374 | SINGAPORE | Technology Hardware & Equipment | 154 | 19.32 |
| 6309303 | SINGAPORE | Real Estate | 128 | 23.1 |
| 6246831 | SINGAPORE | Technology Hardware & Equipment | 276 | 9.02 |
| 6490263 | SINGAPORE | Diversified Financials | 195 | 11.8 |
| 6350602 | SINGAPORE | Food Beverage & Tobacco | 51 | 41.41 |
| 6628859 | SINGAPORE | Transportation | 2,698 | 0.57 |
| 6128713 | SINGAPORE | Capital Goods | 61 | 23.26 |
| 6207582 | SINGAPORE | Technology Hardware & Equipment | 28 | 39.9 |
| 6303866 | SINGAPORE | Diversified Financials | 20 | 49.23 |
| 6654865 | SINGAPORE | Technology Hardware & Equipment | 6,240 | 0.15 |
| 6853468 | SINGAPORE | Real Estate | 22 | 36.83 |
| 6663827 | SINGAPORE | Hotels Restaurants & Leisure | 110 | 6.34 |
| 6274456 | SINGAPORE | Transportation | 19 | 33.38 |
| 6623616 | SINGAPORE | Capital Goods | 230 | 2.79 |
| 6916844 | SINGAPORE | Hotels Restaurants & Leisure | 64 | 9.61 |
| 6811295 | SINGAPORE | Real Estate | 18 | 32.62 |
| 6795139 | SINGAPORE | Transportation | 36 | 16.27 |
| 6207463 | SINGAPORE | Technology Hardware & Equipment | 16 | 35.2 |
| 6415523 | SINGAPORE | Capital Goods | 360 | 1.53 |
| 6153629 | SINGAPORE | Real Estate | 864 | 0.61 |
| 6205133 | SINGAPORE | Capital Goods | 31 | 16.55 |
| 6811143 | SINGAPORE | Health Care Equipment & Service | 1,321 | 0.38 |
| 6972385 | SINGAPORE | Real Estate | 98 | 4.35 |
| 6242260 | SINGAPORE | Retailing | 9 | 44.14 |
| 6440183 | SINGAPORE | Hotels Restaurants & Leisure | 914 | 0.41 |
| 6141903 | SINGAPORE | Technology Hardware & Equipment | 10 | 34.78 |
| 6786735 | SINGAPORE | Real Estate | 8 | 27.77 |
| 5732524 | EU | Telecommunication Services | 10,544 | 14.55 |
| 5501906 | EU | Banks | 5,713 | 16.94 |

(continued)

| | | | | |
|---|---|---|---|---|
| 5705946 | EU | Banks | 6,704 | 13.51 |
| 5669354 | EU | Energy | 2,250 | 16.91 |
| 5271782 | EU | Utilities | 152,640 | 0.22 |
| 4424640 | EU | Utilities | 678 | 37.29 |
| 4913223 | EU | Utilities | 330 | 33.41 |
| 5444012 | EU | Food Beverage & Tobacco | 770 | 10.43 |
| 5813720 | EU | Software & Services | 21,648 | 0.33 |
| 5650422 | EU | Utilities | 179 | 27.73 |
| 5687000 | EU | Capital Goods | 20,863 | 0.19 |
| 5788130 | EU | Commercial Services & Supplies | 85 | 41.88 |
| 4370839 | EU | Pharmaceuticals & Biotechnology | 340 | 10.08 |
| 4571784 | EU | Hotels Restaurants & Leisure | 9,602 | 0.33 |
| 5500118 | EU | Materials | 913 | 3.35 |
| 5333381 | EU | Capital Goods | 82 | 33.5 |
| 4065663 | EU | Transportation | 304 | 7.89 |
| 5987175 | EU | Media | 4,933 | 0.46 |
| 5996245 | EU | Media | 189 | 10.7 |
| 5787115 | EU | Capital Goods | 90 | 21.63 |
| 5729065 | EU | Utilities | 55 | 34.93 |
| 5504789 | EU | Real Estate | 47 | 35.87 |
| 5442685 | EU | Real Estate | 37 | 41.9 |
| 5738298 | EU | Hotels Restaurants & Leisure | 54 | 28.26 |
| 5387559 | EU | Insurance | 48 | 27.06 |
| 5443365 | EU | Hotels Restaurants & Leisure | 30 | 29.34 |
| 5959378 | EU | Technology Hardware & Equipment | 4,262 | 24.11 |
| 5380031 | EU | Banks | 1,475 | 20.81 |
| 5461572 | EU | Insurance | 702 | 31.52 |
| 5703661 | EU | Banks | 459 | 42.18 |
| 5687431 | EU | Retailing | 470 | 40.05 |
| 5554041 | EU | Commercial Services & Supplies | 280 | 47.35 |
| 5963108 | EU | Capital Goods | 856 | 14.04 |
| 5978384 | EU | Telecommunication Services | 25,994 | 0.46 |
| 5466782 | EU | Consumer Durables & Apparel | 1,017 | 11.7 |
| 4813345 | EU | Banks | 447 | 25.98 |
| 5698789 | EU | Capital Goods | 220 | 43.07 |
| 4865379 | EU | Materials | 211 | 41.27 |
| 4813431 | EU | Capital Goods | 16,476 | 0.51 |
| 4937739 | EU | Capital Goods | 322 | 25.46 |
| 5065060 | EU | Telecommunication Services | 149 | 52.1 |

(continued)

| 4050971 | EU | Capital Goods | 639 | 8.54 |
|---|---|---|---|---|
| 5048566 | EU | Food Beverage & Tobacco | 74 | 51.05 |
| 4937728 | EU | Capital Goods | 56 | 64.8 |
| 4050982 | EU | Capital Goods | 166 | 19.79 |
| 5328127 | EU | Media | 71 | 45.1 |
| 4051576 | EU | Materials | 1,199 | 2.63 |
| 5450031 | EU | Health Care Equipment & Service | 4,596 | 0.6 |
| 5541087 | EU | Real Estate | 4,212 | 0.59 |
| 4767066 | EU | Capital Goods | 87 | 28.07 |
| 5970465 | EU | Software & Services | 45 | 53.89 |
| 5437744 | EU | Diversified Financials | 120 | 17.74 |
| 5036066 | EU | Materials | 128 | 15.52 |
| 4590585 | EU | Health Care Equipment & Service | 66 | 29.54 |
| 5703672 | EU | Banks | 46 | 33.3 |
| 4902384 | EU | Tires & Rubber | 191 | 7.73 |
| 5450053 | EU | Health Care Equipment & Service | 5,870 | 0.25 |
| 4767099 | EU | Capital Goods | 605 | 1.98 |
| 4847195 | EU | Materials | 59 | 19.81 |
| 5871063 | EU | Telecommunication Services | 181 | 5.91 |
| 4426862 | EU | Materials | 37 | 28.2 |
| 5255850 | EU | Materials | 99 | 7.42 |
| 4847184 | EU | Materials | 43 | 11.85 |
| 7103065 | EU | Pharmaceuticals & Biotechnology | 1,468,431 | 0.18 |
| 4616696 | EU | Food Beverage & Tobacco | 22,165 | 8.12 |
| 5962354 | EU | Banks | 3,239 | 42.85 |
| 7110388 | EU | Pharmaceuticals & Biotechnology | 2,291 | 56.3 |
| 4245614 | EU | Banks | 2,480 | 43.76 |
| 5983816 | EU | Insurance | 3,307 | 20.5 |
| 4850029 | EU | Insurance | 1,106 | 55.85 |
| 7108899 | EU | Capital Goods | 2,050 | 22.94 |
| 4738211 | EU | Consumer Durables & Apparel | 8,002 | 2.99 |
| 5533976 | EU | Telecommunication Services | 967 | 15.06 |
| 5981070 | EU | Pharmaceuticals & Biotechnology | 37,904 | 0.36 |
| 4420499 | EU | Materials | 387 | 34.8 |
| 7110720 | EU | Commercial Services & Supplies | 2,341 | 5.49 |
| 4356646 | EU | Materials | 1,987 | 5.92 |
| 7108918 | EU | Pharmaceuticals & Biotechnology | 929 | 10.77 |
| 4762403 | EU | Consumer Durables & Apparel | 30,378 | 0.3 |
| 5196744 | EU | Materials | 179 | 49.78 |

(continued)

| 5479757 | EU | Materials | 495 | 16.57 |
|---|---|---|---|---|
| 4329422 | EU | Consumer Durables & Apparel | 186 | 34.79 |
| 4762351 | EU | Consumer Durables & Apparel | 635 | 9.74 |
| 4532673 | EU | Health Care Equipment & Service | 17,791 | 0.34 |
| 5794223 | EU | Materials | 1,309 | 4.6 |
| 5980613 | EU | Materials | 582 | 8 14 |
| 4854719 | EU | Capital Goods | 101 | 37.34 |
| 7110902 | EU | Health Care Equipment & Service | 136 | 20.37 |
| 4066848 | EU | Technology Hardware & Equipment | 118 | 23.2 |
| 4714750 | EU | Hotels Restaurants & Leisure | 5,623 | 0.49 |
| 4668073 | EU | Health Care Equipment & Service | 61 | 41.21 |
| 4824767 | EU | Commercial Services & Supplies | 6,894 | 0.37 |
| 5682577 | EU | Retailing | 45 | 49.69 |
| 4778875 | EU | Capital Goods | 43 | 45.42 |
| 4341783 | EU | Capital Goods | 114 | 16.89 |
| 4612757 | EU | Technology Hardware & Equipment | 87 | 21.71 |
| 5064744 | EU | Media | 40 | 45.68 |
| 4581619 | EU | Retailing | 78 | 22.41 |
| 4697378 | EU | Technology Hardware & Equipment | 10,975 | 0.16 |
| 4350035 | EU | Consumer Durables & Apparel | 4,269 | 0.34 |
| 4824778 | EU | Commercial Services & Supplies | 22 | 19.79 |
| 798059 | EU | Energy | 8,783 | 50.65 |
| 719210 | EU | Telecommunication Services | 6,711 | 65.25 |
| 925288 | EU | Pharmaceuticals & Biotechnology | 22,568 | 17.25 |
| 540528 | EU | Banks | 20,984 | 12.06 |
| 989529 | EU | Pharmaceuticals & Biotechnology | 256,269 | 0.73 |
| 803414 | EU | Energy | 3,253 | 57.37 |
| 870612 | EU | Banks | 3,297 | 40.66 |
| 754783 | EU | Banks | 203,024 | 0.61 |
| 78201 | EU | Banks | 8,129 | 14.98 |
| 140843 | EU | Telecommunication Services | 4,871 | 22.83 |
| 237400 | EU | Food Beverage & Tobacco | 2,766 | 30.03 |
| 216238 | EU | Insurance | 2,853 | 24.21 |
| 593395 | EU | Banks | 3,919 | 15.15 |
| 4455 | EU | Banks | 1,363 | 43.29 |
| 884709 | EU | Food & Drug Retailing | 131,857 | 0.41 |
| 709954 | EU | Insurance | 111,591 | 0.48 |
| 574873 | EU | Food Beverage & Tobacco | 1,094 | 45.57 |
| 718875 | EU | Materials | 1,177 | 40.71 |

(continued)

| 236913 | EU | Media | 2,071 | 22.55 |
|---|---|---|---|---|
| 162557 | EU | Telecommunication Services | 1,126 | 35.44 |
| 533153 | EU | Hotels Restaurants & Leisure | 59,869 | 0.63 |
| 677608 | EU | Media | 1,421 | 25.79 |
| 877431 | EU | Technology Hardware & Equipment | 1,648 | 20.2 |
| 876289 | EU | Energy | 1,123 | 26.84 |
| 573438 | EU | Utilities | 20,568 | 1.46 |
| 287580 | EU | Food Beverage & Tobacco | 746 | 39.2 |
| 610700 | EU | Food Beverage & Tobacco | 1,890 | 15.26 |
| 690070 | EU | Utilities | 1,308 | 21.98 |
| 128269 | EU | Diversified Financials | 58,995 | 0.48 |
| 560399 | EU | Insurance | 79,565 | 0.34 |
| 730835 | EU | Media | 733 | 36 62 |
| 974042 | EU | Media | 57,094 | 0.47 |
| 242824 | EU | Utilities | 465 | 56.52 |
| 565402 | EU | Retailing | 1,939 | 12.97 |
| 888693 | EU | Diversified Financials | 623 | 38.02 |
| 56650 | EU | Materials | 1,308 | 18.1 |
| 661689 | EU | Insurance | 611 | 34.78 |
| 243195 | EU | Hotels Restaurants & Leisure | 7,575 | 2.8 |
| 67340 | EU | Transportation | 490 | 41.79 |
| 262015 | EU | Retailing | 459 | 43.41 |
| 141192 | EU | Media | 4,684 | 4.02 |
| 258304 | EU | Automobiles & Components | 622 | 29.75 |
| 111441 | EU | Food & Drug Retailing | 539 | 33.79 |
| 384704 | EU | Retailing | 1,360 | 13.19 |
| 416102 | EU | Commercial Services & Supplies | 861 | 19.86 |
| 790873 | EU | Utilities | 403 | 41.76 |
| 263494 | EU | Capital Goods | 38,516 | 0.43 |
| 767640 | EU | Food & Drug Retailing | 657 | 24.98 |
| 727871 | EU | Household & Personal Products | 28,813 | 0.57 |
| 108120 | EU | Materials | 348 | 46.85 |
| 976640 | EU | Utilities | 507 | 30.28 |
| 827566 | EU | Media | 313 | 48.09 |
| 504502 | EU | Real Estate | 253 | 59.42 |
| 47245 | EU | Retailing | 654 | 22.99 |
| 818270 | EU | Capital Goods | 334 | 44.11 |
| 807041 | EU | Capital Goods | 5,894 | 2.47 |
| 454492 | EU | Food Beverage & Tobacco | 700 | 18.2 |

(continued)

| | | | | |
|---|---|---|---|---|
| 522708 | EU | Software & Services | 1,119 | 11.21 |
| 732712 | EU | Commercial Services & Supplies | 361 | 33.78 |
| 274753 | EU | Health Care Equipment & Service | 775 | 14.84 |
| 500254 | EU | Hotels Restaurants & Leisure | 225 | 50.73 |
| 408983 | EU | Materials | 318 | 35.97 |
| 49241 | EU | Food & Drug Retailing | 701 | 16.28 |
| 59585 | EU | Technology Hardware & Equipment | 26,588 | 0.42 |
| 44473 | EU | Media | 533 | 20.66 |
| 646233 | EU | Utilities | 16,901 | 0.64 |
| 632016 | EU | Utilities | 726 | 14.5 |
| 421861 | EU | Retailing | 369 | 28.3 |
| 459497 | EU | Materials | 249 | 41.47 |
| 385785 | EU | Software & Services | 371 | 27.68 |
| 571272 | EU | Real Estate | 390 | 26.28 |
| 783969 | EU | Food Beverage & Tobacco | 450 | 22.53 |
| 182276 | EU | Pharmaceuticals & Biotechnology | 248 | 40.72 |
| 922320 | EU | Health Care Equipment & Service | 525 | 18.66 |
| 976402 | EU | Retailing | 916 | 10.32 |
| 802165 | EU | Software & Services | 37,545 | 0.25 |
| 309644 | EU | Capital Goods | 277 | 31.63 |
| 173474 | EU | Commercial Services & Supplies | 243 | 34.97 |
| 945736 | EU | Media | 513 | 16.31 |
| 721293 | EU | Transportation | 427 | 19.13 |
| 448688 | EU | Transportation | 490 | 16.5 |
| 472609 | EU | Technology Hardware & Equipment | 203 | 39.41 |
| 136701 | EU | Real Estate | 175 | 45.33 |
| 828053 | EU | Materials | 517 | 15.36 |
| 3022421 | EU | Media | 118 | 65.02 |
| 341925 | EU | Media | 28,041 | 0.27 |
| 963590 | EU | Hotels Restaurants & Leisure | 528 | 14.28 |
| 54632 | EU | Utilities | 15,872 | 0.47 |
| 476407 | EU | Materials | 485 | 14.14 |
| 294405 | EU | Diversified Financials | 28,498 | 0.24 |
| 386302 | EU | Materials | 115 | 55.59 |
| 268596 | EU | Diversified Financials | 167 | 38.39 |
| 154004 | EU | Materials | 10,900 | 0.58 |
| 654452 | EU | Media | 174 | 35.68 |
| 680048 | EU | Transportation | 251 | 24.15 |
| 726641 | EU | Materials | 160 | 37.68 |

(continued)

| 129057 | EU | Transportation | 220 | 27.33 |
|---|---|---|---|---|
| 3034545 | EU | Hotels Restaurants & Leisure | 197 | 29.84 |
| 384737 | EU | Software & Services | 235 | 22.76 |
| 843443 | EU | Utilities | 177 | 28.46 |
| 814104 | EU | Real Estate | 22,850 | 0.22 |
| 797379 | EU | Commercial Services & Supplies | 128 | 38.38 |
| 965756 | EU | Media | 96 | 48.26 |
| 406501 | EU | Real Estate | 129 | 35.74 |
| 56434 | EU | Transportation | 16,501 | 0.28 |
| 987794 | EU | Utilities | 134 | 33.81 |
| 100159 | EU | Commercial Services & Supplies | 136 | 32.68 |
| 747761 | EU | Capital Goods | 341 | 12.95 |
| 766807 | EU | Diversified Financials | 184 | 23.54 |
| 15219 | EU | Commercial Services & Supplies | 2,607 | 1.65 |
| 329459 | EU | Capital Goods | 119 | 35.68 |
| 688462 | EU | Capital Goods | 12,920 | 0.33 |
| 67748 | EU | Capital Goods | 8,793 | 0.48 |
| 40374 | EU | Retailing | 47 | 84.53 |
| 240549 | EU | Diversified Financials | 91 | 42.8 |
| 345217 | EU | Transportation | 94 | 41.2 |
| 878230 | EU | Consumer Durables & Apparel | 249 | 15.54 |
| 425045 | EU | Materials | 81 | 47.42 |
| 147899 | EU | Commercial Services & Supplies | 7,440 | 0.49 |
| 28262 | EU | Capital Goods | 134 | 26.94 |
| 94177 | EU | Consumer Durables & Apparel | 5,777 | 0.6 |
| 875413 | EU | Food Beverage & Tobacco | 95 | 36.34 |
| 68707 | EU | Materials | 326 | 10.39 |
| 256610 | EU | Commercial Services & Supplies | 55 | 61.22 |
| 798112 | EU | Health Care Equipment & Service | 6,347 | 0.51 |
| 724076 | EU | Hotels Restaurants & Leisure | 347 | 9.1 |
| 10979 | EU | Hotels Restaurants & Leisure | 61 | 51.26 |
| 849902 | EU | Transportation | 688 | 4.45 |
| 96162 | EU | Capital Goods | 115 | 24.09 |
| 457963 | EU | Capital Goods | 241 | 11.41 |
| 667278 | EU | Consumer Durables & Apparel | 143 | 18.82 |
| 938059 | EU | Commercial Services & Supplies | 425 | 6.31 |
| 81180 | EU | Consumer Durables & Apparel | 44 | 58.88 |
| 176268 | EU | Capital Goods | 74 | 34.37 |
| 971344 | EU | Consumer Durables & Apparel | 69 | 33.77 |

(continued)

| | | | | |
|---|---|---|---|---|
| 414667 | EU | Transportation | 75 | 27.01 |
| 962951 | EU | Real Estate | 85 | 22.44 |
| 15402 | EU | Commercial Services & Supplies | 51 | 36.44 |
| 2380498 | USA | Capital Goods | 42,155 | 26.23 |
| 2588173 | USA | Software & Services | 15,605 | 46.02 |
| 2326618 | USA | Energy | 17,495 | 39.32 |
| 2684703 | USA | Pharmaceuticals & Biotechnology | 22,256 | 27.71 |
| 2297907 | USA | Diversified Financials | 17,084 | 33.33 |
| 2712165 | USA | Media | 24,109 | 21.47 |
| 2005973 | USA | Technology Hardware & Equipment | 8,573 | 52.16 |
| 2463247 | USA | Technology Hardware & Equipment | 819,960 | 0.52 |
| 2578312 | USA | Pharmaceuticals & Biotechnology | 11,180 | 35.58 |
| 2936921 | USA | Retailing | 22,011 | 16.21 |
| 2027342 | USA | Insurance | 38,548 | 9.03 |
| 2090571 | USA | Telecommunication Services | 8,760 | 37.36 |
| 2831811 | USA | Telecommunication Services | 558,353 | 0.58 |
| 2198163 | USA | Technology Hardware & Equipment | 5,366 | 58.67 |
| 2475833 | USA | Pharmaceuticals & Biotechnology | 9,160 | 33.7 |
| 2692632 | USA | Food Beverage & Tobacco | 5,015 | 51.7 |
| 2434209 | USA | Retailing | 15,471 | 16.15 |
| 2126335 | USA | Pharmaceuticals & Biotechnology | 75,334 | 3.3 |
| 2206657 | USA | Food Beverage & Tobacco | 8,302 | 26.12 |
| 2038010 | USA | Capital Goods | 2,625 | 79.41 |
| 2190385 | USA | Diversified Financials | 12,869 | 16.18 |
| 2295172 | USA | Technology Hardware & Equipment | 6,236 | 32.08 |
| 2295677 | USA | Banks | 4,626 | 42.22 |
| 2704407 | USA | Household & Personal Products | 5,713 | 33.95 |
| 2930611 | USA | Media | 5,424 | 35.69 |
| 2516152 | USA | Pharmaceuticals & Biotechnology | 4,350 | 44.38 |
| 2030577 | USA | Telecommunication Services | 3,581 | 52.89 |
| 2649100 | USA | Banks | 14,611 | 12.09 |
| 2333889 | USA | Diversified Financials | 16,261 | 10.77 |
| 2090601 | USA | Telecommunication Services | 2,556 | 68.15 |
| 2002305 | USA | Pharmaceuticals & Biotechnology | 5,366 | 32.23 |
| 2027104 | USA | Pharmaceuticals & Biotechnology | 3,972 | 42.97 |
| 2262314 | USA | Diversified Financials | 4,075 | 39.21 |
| 2681511 | USA | Food Beverage & Tobacco | 3,466 | 44.27 |
| 2661568 | USA | Software & Services | 5,133 | 29.62 |
| 2270726 | USA | Media | 28,917 | 5.11 |

(continued)

| 2885409 | USA | Technology Hardware & Equipment | 7,325 | 20.12 |
|---|---|---|---|---|
| 2859954 | USA | Technology Hardware & Equipment | 10,183 | 13.54 |
| 2838555 | USA | Energy | 10,939 | 12.53 |
| 2023607 | USA | Pharmaceuticals & Biotechnology | 20,954 | 6.5 |
| 2108601 | USA | Capital Goods | 2,652 | 50.22 |
| 2261526 | USA | Technology Hardware & Equipment | 5,759 | 22.48 |
| 2571883 | USA | Pharmaceuticals & Biotechnology | 19,149 | 6.76 |
| 2580986 | USA | Diversified Financials | 3,280 | 37.56 |
| 2034494 | USA | Telecommunication Services | 595,894 | 0.2 |
| 2575465 | USA | Health Care Equipment & Service | 6,006 | 19.49 |
| 2732561 | USA | Telecommunication Services | 5,184 | 22.28 |
| 2026082 | USA | Diversified Financials | 30,971 | 3.72 |
| 2615468 | USA | Automobiles & Components | 259,278 | 0.43 |
| 2018175 | USA | Materials | 3,940 | 27.65 |
| 2595708 | USA | Capital Goods | 216,176 | 0.49 |
| 2466019 | USA | Utilities | 4,011 | 24.86 |
| 2424006 | USA | Technology Hardware & Equipment | 203,595 | 0.48 |
| 2334150 | USA | Diversified Financials | 4,920 | 19.8 |
| 2298591 | USA | Banks | 188,600 | 0.51 |
| 2462222 | USA | Banks | 2,994 | 32.08 |
| 2046552 | USA | Technology Hardware & Equipment | 2,671 | 35.67 |
| 2714923 | USA | Technology Hardware & Equipment | 4,382 | 21.61 |
| 2934839 | USA | Food & Drug Retailing | 2,803 | 33.24 |
| 2736035 | USA | Banks | 2,393 | 37.88 |
| 2033004 | USA | Food Beverage & Tobacco | 126,537 | 0.67 |
| 2915500 | USA | Capital Goods | 1,915 | 43.94 |
| 2076021 | USA | Banks | 5,259 | 15.91 |
| 2212858 | USA | Media | 2,275 | 36.37 |
| 2550707 | USA | Hotels Restaurants & Leisure | 266,552 | 0.31 |
| 2259101 | USA | Retailing | 6,567 | 12.37 |
| 2399892 | USA | Media | 5,088 | 15.84 |
| 2283906 | USA | Utilities | 3,701 | 21.6 |
| 2606600 | USA | Technology Hardware & Equipment | 136,882 | 0.58 |
| 2021805 | USA | Materials | 14,571 | 5.43 |
| 2537573 | USA | Technology Hardware & Equipment | 6,342 | 12.13 |
| 2779201 | USA | Energy | 1,308 | 58.55 |
| 2278719 | USA | Materials | 205,910 | 0.37 |
| 2295945 | USA | Utilities | 2,316 | 32.88 |
| 2065308 | USA | Commercial Services & Supplies | 1,857 | 40.64 |

(continued)

| | | | | |
|---|---|---|---|---|
| 2491839 | USA | Household & Personal Products | 2,171 | 33.2 |
| 2175672 | USA | Health Care Equipment & Service | 1,606 | 44.02 |
| 2019952 | USA | Insurance | 2,447 | 28.2 |
| 2942188 | USA | Banks | 264,780 | 0.26 |
| 2440273 | USA | Diversified Financials | 3,481 | 19.69 |
| 2341860 | USA | Banks | 15,993 | 4.17 |
| 2312736 | USA | Software & Services | 5,754 | 11.45 |
| 2365804 | USA | Automobiles & Components | 1,930 | 33.43 |
| 2202536 | USA | Media | 2,795 | 23.02 |
| 2567741 | USA | Insurance | 6,277 | 10.12 |
| 2313405 | USA | Capital Goods | 1,201 | 52.43 |
| 2369301 | USA | Household & Personal Products | 2,181 | 28.65 |
| 2085102 | USA | Health Care Equipment & Service | 3,799 | 16.33 |
| 2336747 | USA | Banks | 2,374 | 25.24 |
| 2344331 | USA | Commercial Services & Supplies | 3,348 | 17.33 |
| 2767165 | USA | Food & Drug Retailing | 236,983 | 0.24 |
| 2547055 | USA | Diversified Financials | 4,623 | 12.18 |
| 2536763 | USA | Retailing | 112,189 | 0.5 |
| 2907789 | USA | Technology Hardware & Equipment | 1,747 | 31.55 |
| 2779397 | USA | Diversified Financials | 14,340 | 3.69 |
| 2670519 | USA | Utilities | 973 | 51.52 |
| 2360326 | USA | Retailing | 100,683 | 0.48 |
| 2577609 | USA | Food & Drug Retailing | 942 | 49.73 |
| 2224701 | USA | Technology Hardware & Equipment | 4,208 | 11.07 |
| 2576350 | USA | Banks | 1,426 | 32.59 |
| 2588184 | USA | Technology Hardware & Equipment | 10,489 | 4.36 |
| 2002479 | USA | Utilities | 2,540 | 17.88 |
| 2497406 | USA | Food & Drug Retailing | 2,181 | 20.62 |
| 2967181 | USA | Utilities | 2,375 | 18.59 |
| 2212193 | USA | Health Care Equipment & Service | 2,658 | 16.44 |
| 2917766 | USA | Health Care Equipment & Service | 1,106 | 38.66 |
| 2868165 | USA | Food & Drug Retailing | 2,942 | 14.51 |
| 2510723 | USA | Diversified Financials | 2,223 | 19.17 |
| 2135115 | USA | Media | 2,673 | 15.88 |
| 2692665 | USA | Banks | 871 | 47.68 |
| 2180201 | USA | Capital Goods | 2,513 | 16.53 |
| 2465254 | USA | Materials | 3,001 | 13.62 |
| 2405302 | USA | Energy | 3,667 | 11.09 |
| 2360304 | USA | Media | 75,421 | 0.53 |

(continued)

| 2210874 | USA | Technology Hardware & Equipment | 3,068 | 12.7 |
|---|---|---|---|---|
| 2842040 | USA | Diversified Financials | 977 | 39.45 |
| 2457552 | USA | Capital Goods | 66,900 | 0.57 |
| 2937667 | USA | Commercial Services & Supplies | 99,710 | 0.38 |
| 2279303 | USA | Media | 1,741 | 21.58 |
| 2496113 | USA | Retailing | 9,581 | 3.89 |
| 2026361 | USA | Insurance | 39,637 | 0.94 |
| 2860990 | USA | Banks | 2,780 | 13.33 |
| 2520153 | USA | Technology Hardware & Equipment | 1,367 | 27.08 |
| 2032067 | USA | Technology Hardware & Equipment | 2,227 | 16.59 |
| 2542049 | USA | Utilities | 10,119 | 3.64 |
| 2820563 | USA | Technology Hardware & Equipment | 66,280 | 0.55 |
| 2573760 | USA | Technology Hardware & Equipment | 1,640 | 22.12 |
| 2701271 | USA | Retailing | 6,462 | 5.59 |
| 2821287 | USA | Energy | 2,848 | 12.62 |
| 2522096 | USA | Capital Goods | 1,702 | 21.11 |
| 2224284 | USA | Utilities | 3,745 | 9.51 |
| 2407966 | USA | Diversified Financials | 1,056 | 33.65 |
| 2032380 | USA | Energy | 1,084 | 32.79 |
| 2026242 | USA | Utilities | 660 | 53.33 |
| 2829601 | USA | Utilities | 2,078 | 16.84 |
| 2217109 | USA | Food Beverage & Tobacco | 645 | 53.78 |
| 2516839 | USA | Technology Hardware & Equipment | 736 | 46.84 |
| 2476193 | USA | Insurance | 107,510 | 0.32 |
| 2790763 | USA | Software & Services | 1,548 | 22.19 |
| 2625047 | USA | Banks | 509 | 67.29 |
| 2018573 | USA | Diversified Financials | 130,712 | 0.26 |
| 2365161 | USA | Capital Goods | 1,921 | 17.61 |
| 2881537 | USA | Technology Hardware & Equipment | 831 | 39.84 |
| 2419240 | USA | Food Beverage & Tobacco | 3,746 | 8.73 |
| 2196479 | USA | Health Care Equipment & Service | 1,044 | 31.06 |
| 2639491 | USA | Utilities | 1,440 | 22.49 |
| 2985677 | USA | Technology Hardware & Equipment | 2,177 | 14.86 |
| 2411053 | USA | Automobiles & Components | 703 | 45.75 |
| 2933751 | USA | Software & Services | 606 | 51.3 |
| 2300601 | USA | Consumer Durables & Apparel | 680 | 45.54 |
| 2312781 | USA | Telecommunication Services | 108,477 | 0.28 |
| 2440637 | USA | Utilities | 571 | 52.7 |
| 2648668 | USA | Banks | 532 | 55.94 |

(continued)

| 2551443 | USA | Media | 9,637 | 3.09 |
|---|---|---|---|---|
| 2626879 | USA | Health Care Equipment & Service | 2,806 | 10.6 |
| 2542685 | USA | Utilities | 555 | 53.1 |
| 2914734 | USA | Transportation | 626 | 47.04 |
| 2214832 | USA | Software & Services | 60,490 | 0.48 |
| 2787312 | USA | Retailing | 2,258 | 12.77 |
| 2715302 | USA | Food Beverage & Tobacco | 657 | 43.78 |
| 2214638 | USA | Commercial Services & Supplies | 1,673 | 16.96 |
| 2154927 | USA | Transportation | 976 | 29.06 |
| 2012467 | USA | Food & Drug Retailing | 4,963 | 5.67 |
| 2195722 | USA | Insurance | 846 | 33.25 |
| 2517382 | USA | Transportation | 436 | 63.72 |
| 2072085 | USA | Energy | 574 | 48.27 |
| 2931744 | USA | Banks | 369 | 74.56 |
| 2674458 | USA | Commercial Services & Supplies | 472 | 57.81 |
| 2958936 | USA | Materials | 89,584 | 0.3 |
| 2541314 | USA | Insurance | 6,853 | 3.87 |
| 2285065 | USA | Telecommunication Services | 1,306 | 20.01 |
| 2885700 | USA | Utilities | 2,296 | 11.31 |
| 2215460 | USA | Food Beverage & Tobacco | 1,009 | 2554 |
| 2367026 | USA | Food Beverage & Tobacco | 58,519 | 0.44 |
| 2431846 | USA | Technology Hardware & Equipment | 810 | 31.61 |
| 2393979 | USA | Health Care Equipment & Service | 937 | 27.17 |
| 2466321 | USA | Media | 1,005 | 25.31 |
| 2903550 | USA | Media | 110,518 | 0.23 |
| 2655408 | USA | Energy | 5,064 | 4.9 |
| 2066721 | USA | Household & Personal Products | 584 | 42.35 |
| 2193362 | USA | Technology Hardware & Equipment | 979 | 25.18 |
| 2142784 | USA | Transportation | 1,275 | 19.27 |
| 2573890 | USA | Retailing | 2,062 | 11.82 |
| 2439538 | USA | Pharmaceuticals & Biotechnology | 1,287 | 18.74 |
| 2328915 | USA | Utilities | 2,905 | 7.96 |
| 2769503 | USA | Insurance | 1,166 | 19.65 |
| 2367598 | USA | Pharmaceuticals & Biotechnology | 1,191 | 19 |
| 2087476 | USA | Software & Services | 432 | 52.25 |
| 2989301 | USA | Retailing | 760 | 29.59 |
| 2093990 | USA | Energy | 1,345 | 16.7 |
| 2490911 | USA | Banks | 499 | 44.81 |
| 2570200 | USA | Capital Goods | 5,219 | 4.29 |

(continued)

| 2707677 | USA | Utilities | 926 | 24.09 |
|---|---|---|---|---|
| 2690506 | USA | Commercial Services & Supplies | 92,926 | 0.24 |
| 2910970 | USA | Energy | 765 | 29.09 |
| 2344096 | USA | Telecommunication Services | 389 | 57.06 |
| 2375643 | USA | Banks | 1,153 | 19.12 |
| 2261203 | USA | Capital Goods | 381 | 57.35 |
| 2008154 | USA | Software & Services | 1,041 | 20.94 |
| 2212870 | USA | Banks | 11,121 | 1.95 |
| 2721730 | USA | Food Beverage & Tobacco | 57,064 | 0.38 |
| 2378534 | USA | Health Care Equipment & Service | 646 | 33.53 |
| 2780366 | USA | Technology Hardware & Equipment | 460 | 46.97 |
| 2480138 | USA | Technology Hardware & Equipment | 53,695 | 0.4 |
| 2142922 | USA | Software & Services | 610 | 35.17 |
| 2682796 | USA | Software & Services | 404 | 53.03 |
| 2283401 | USA | Insurance | 102,026 | 0.21 |
| 2779502 | USA | Technology Hardware & Equipment | 38,114 | 0.56 |
| 2698470 | USA | Materials | 367 | 57.57 |
| 2317087 | USA | Utilities | 1,218 | 17.23 |
| 2176750 | USA | Hotels Restaurants & Leisure | 53,061 | 0.39 |
| 2094670 | USA | Retailing | 793 | 26.04 |
| 2914273 | USA | Energy | 3,795 | 5.37 |
| 2011602 | USA | Materials | 968 | 21.04 |
| 2098456 | USA | Pharmaceuticals & Biotechnology | 884 | 23.05 |
| 2215653 | USA | Commercial Services & Supplies | 5,408 | 3.76 |
| 2516378 | USA | Insurance | 330 | 61.31 |
| 2573209 | USA | Insurance | 786 | 25.34 |
| 2007849 | USA | Technology Hardware & Equipment | 2,295 | 8.62 |
| 2230429 | USA | Media | 538 | 36.64 |
| 2210614 | USA | Hotels Restaurants & Leisure | 3,806 | 5.15 |
| 2422174 | USA | Technology Hardware & Equipment | 822 | 23.83 |
| 2345022 | USA | Retailing | 778 | 25.1 |
| 2641894 | USA | Transportation | 453 | 43.01 |
| 2604206 | USA | Utilities | 1,846 | 10.39 |
| 2256511 | USA | Commercial Services & Supplies | 418 | 44.84 |
| 2160753 | USA | Transportation | 890 | 21 |
| 2385998 | USA | Automobiles & Components | 2,348 | 7.89 |
| 2038430 | USA | Real Estate | 83,801 | 0.22 |
| 2754060 | USA | Capital Goods | 371 | 48.81 |
| 2680905 | USA | Utilities | 69,090 | 0.26 |

(continued)

| | | | | |
|---|---|---|---|---|
| 2216850 | USA | Utilities | 490 | 36.59 |
| 2293819 | USA | Retailing | 400 | 44.75 |
| 2699291 | USA | Materials | 2,540 | 7 |
| 2824060 | USA | Banks | 876 | 20.3 |
| 2073408 | USA | Utilities | 1,191 | 14.8 |
| 2885937 | USA | Capital Goods | 865 | 20.32 |
| 2705024 | USA | Insurance | 345 | 50.95 |
| 2212717 | USA | Insurance | 804 | 21.81 |
| 2455965 | USA | Pharmaceuticals & Biotechnology | 27,205 | 0.64 |
| 2047317 | USA | Food Beverage & Tobacco | 811 | 21.37 |
| 2363187 | USA | Media | 686 | 25.25 |
| 2575896 | USA | Pharmaceuticals & Biotechnology | 574 | 29.97 |
| 2371436 | USA | Hotels Restaurants & Leisure | 570 | 29.96 |
| 2046251 | USA | Technology Hardware & Equipment | 529 | 32.24 |
| 2860365 | USA | Software & Services | 743 | 22.75 |
| 2758051 | USA | Capital Goods | 527 | 32 |
| 2036337 | USA | Energy | 42,764 | 0.39 |
| 2367305 | USA | Materials | 49,000 | 0.34 |
| 2085878 | USA | Retailing | 348 | 47.57 |
| 2087807 | USA | Health Care Equipment & Service | 1,209 | 13.7 |
| 2278407 | USA | Capital Goods | 952 | 17.38 |
| 2043962 | USA | Energy | 58,688 | 0.28 |
| 2841489 | USA | Retailing | 733 | 22.41 |
| 2480677 | USA | Energy | 457 | 35.59 |
| 2462448 | USA | Capital Goods | 529 | 30.69 |
| 2547044 | USA | Insurance | 425 | 38.14 |
| 2310194 | USA | Software & Services | 100,545 | 0.16 |
| 2582164 | USA | Telecommunication Services | 45,912 | 0.35 |
| 2630643 | USA | Technology Hardware & Equipment | 1,284 | 12.38 |
| 2548616 | USA | Insurance | 822 | 19.17 |
| 2650748 | USA | Technology Hardware & Equipment | 1,236 | 12.73 |
| 2235822 | USA | Technology Hardware & Equipment | 555 | 28.28 |
| 2162845 | USA | Food Beverage & Tobacco | 1,254 | 12.5 |
| 2098597 | USA | Health Care Equipment & Service | 586 | 26.68 |
| 2128762 | USA | Technology Hardware & Equipment | 836 | 18.66 |
| 2472362 | USA | Insurance | 48,753 | 0.32 |
| 2554635 | USA | Technology Hardware & Equipment | 10,865 | 1.42 |
| 2985202 | USA | Technology Hardware & Equipment | 448 | 34.28 |
| 2884183 | USA | Technology Hardware & Equipment | 32,657 | 0.47 |

(continued)

| | | | | |
|---|---|---|---|---|
| 2590770 | USA | Pharmaceuticals & Biotechnology | 472 | 32.36 |
| 2490502 | USA | Energy | 394 | 38.43 |
| 2572303 | USA | Consumer Durables & Apparel | 355 | 42.63 |
| 2100920 | USA | Utilities | 584 | 25.86 |
| 2681801 | USA | Health Care Equipment & Service | 488 | 30.9 |
| 2853688 | USA | Health Care Equipment & Service | 2,664 | 5.63 |
| 2786159 | USA | Commercial Services & Supplies | 772 | 19.26 |
| 2640147 | USA | Consumer Durables & Apparel | 508 | 29.22 |
| 2429766 | USA | Pharmaceuticals & Biotechnology | 611 | 24.26 |
| 2635701 | USA | Consumer Durables & Apparel | 265 | 55.48 |
| 2937689 | USA | Technology Hardware & Equipment | 744 | 19.58 |
| 2319157 | USA | Real Estate | 428 | 33.77 |
| 2459020 | USA | Software & Services | 936 | 15.27 |
| 2645409 | USA | Utilities | 314 | 45.01 |
| 2284761 | USA | Commercial Services & Supplies | 1,503 | 9.41 |
| 2098876 | USA | Hotels Restaurants & Leisure | 307 | 45.3 |
| 2342034 | USA | Commercial Services & Supplies | 436 | 31.91 |
| 2842255 | USA | Hotels Restaurants & Leisure | 1,232 | 11.22 |
| 2280220 | USA | Utilities | 505 | 27.29 |
| 2433842 | USA | Insurance | 57,395 | 0.24 |
| 2069065 | USA | Energy | 26,380 | 0.52 |
| 2986539 | USA | Software & Services | 638 | 21.44 |
| 2476803 | USA | Automobiles & Components | 1,362 | 10.01 |
| 2807492 | USA | Technology Hardware & Equipment | 538 | 25.31 |
| 2204026 | USA | Household & Personal Products | 466 | 28.74 |
| 2024020 | USA | Utilities | 931 | 14.29 |
| 2215200 | USA | Software & Services | 312 | 42.48 |
| 2250870 | USA | Capital Goods | 1,588 | 8.35 |
| 2138158 | USA | Utilities | 243 | 54.1 |
| 2746829 | USA | Materials | 855 | 15.32 |
| 2632003 | USA | Media | 943 | 13.87 |
| 2062310 | USA | Technology Hardware & Equipment | 351 | 37.14 |
| 2640664 | USA | Energy | 709 | 18.32 |
| 2315564 | USA | Energy | 887 | 14.64 |
| 2050832 | USA | Utilities | 488 | 26.24 |
| 2516185 | USA | Retailing | 251 | 50.36 |
| 2932361 | USA | Technology Hardware & Equipment | 880 | 14.29 |
| 2898894 | USA | Retailing | 1,187 | 10.57 |
| 2198981 | USA | Utilities | 165 | 75.55 |

(continued)

| | | | | |
|---|---|---|---|---|
| 2671501 | USA | Capital Goods | 509 | 24.51 |
| 2066408 | USA | Commercial Services & Supplies | 8,896 | 1.4 |
| 2068921 | USA | Software & Services | 928 | 13.32 |
| 2249629 | USA | Utilities | 281 | 42.99 |
| 2906452 | USA | Automobiles & Components | 456 | 26.24 |
| 2896081 | USA | Software & Services | 626 | 19 |
| 2949930 | USA | Health Care Equipment & Service | 957 | 12.39 |
| 2105505 | USA | Commercial Services & Supplies | 678 | 17.17 |
| 2931205 | USA | Materials | 438 | 26.42 |
| 2302232 | USA | Software & Services | 55,220 | 0.21 |
| 2197137 | USA | Commercial Services & Supplies | 256 | 45.13 |
| 2196888 | USA | Insurance | 487 | 23.68 |
| 2871505 | USA | Retailing | 275 | 41.9 |
| 2484088 | USA | Utilities | 257 | 44.52 |
| 2457897 | USA | Pharmaceuticals & Biotechnology | 666 | 17.19 |
| 2767381 | USA | Health Care Equipment & Service | 1,093 | 10.46 |
| 2182553 | USA | Software & Services | 345 | 32.91 |
| 2571009 | USA | Software & Services | 224 | 50.56 |
| 2300883 | USA | Capital Goods | 53,782 | 0.21 |
| 2194826 | USA | Pharmaceuticals & Biotechnology | 295 | 38.17 |
| 2024774 | USA | Consumer Durables & Apparel | 564 | 19.93 |
| 2113434 | USA | Health Care Equipment & Service | 140 | 79.79 |
| 2625315 | USA | Banks | 3,902 | 2.87 |
| 2477152 | USA | Consumer Durables & Apparel | 488 | 22.66 |
| 2229676 | USA | Diversified Financials | 623 | 17.59 |
| 2427793 | USA | Software & Services | 266 | 41.16 |
| 2892090 | USA | Retailing | 256 | 41.77 |
| 2471789 | USA | Technology Hardware & Equipment | 782 | 13.67 |
| 2367480 | USA | Capital Goods | 23,980 | 0.44 |
| 2417675 | USA | Health Care Equipment & Service | 554 | 18.99 |
| 2373227 | USA | Energy | 364 | 28.77 |
| 2644837 | USA | Banks | 218 | 47.59 |
| 2886907 | USA | Technology Hardware & Equipment | 227 | 45.41 |
| 2252058 | USA | Diversified Financials | 15,844 | 0.65 |
| 2155919 | USA | Telecommunication Services | 6,965 | 1.46 |
| 2319146 | USA | Commercial Services & Supplies | 322 | 31.47 |
| 2548542 | USA | Technology Hardware & Equipment | 1,173 | 8.49 |
| 2624356 | USA | Technology Hardware & Equipment | 30,081 | 0.33 |
| 2110703 | USA | Commercial Services & Supplies | 212 | 46.02 |

(continued)

| 2989828 | USA | Banks | 444 | 21.1 |
|---|---|---|---|---|
| 2366120 | USA | Utilities | 1,437 | 6.52 |
| 2689560 | USA | Utilities | 479 | 19.39 |
| 2717320 | USA | Technology Hardware & Equipment | 34,200 | 0.27 |
| 2705648 | USA | Hotels Restaurants & Leisure | 40,128 | 0.23 |
| 2417987 | USA | Health Care Equipment & Service | 15,473 | 0.59 |
| 2428008 | USA | Hotels Restaurants & Leisure | 1,189 | 7.67 |
| 2702791 | USA | Health Care Equipment & Service | 725 | 12.57 |
| 2465760 | USA | Capital Goods | 32,418 | 0.28 |
| 2928199 | USA | Software & Services | 579 | 15.52 |
| 2636607 | USA | Materials | 387 | 23.14 |
| 2378200 | USA | Automobiles & Components | 16,136 | 0.55 |
| 2226536 | USA | Software & Services | 215 | 41.07 |
| 2807566 | USA | Materials | 331 | 26.73 |
| 2696838 | USA | Capital Goods | 315 | 27.99 |
| 2812452 | USA | Real Estate | 14,689 | 0.6 |
| 2651086 | USA | Materials | 192 | 45.43 |
| 2816409 | USA | Energy | 369 | 23.62 |
| 2931595 | USA | Software & Services | 892 | 9.76 |
| 2960384 | USA | Consumer Durables & Apparel | 412 | 20.79 |
| 2464972 | USA | Hotels Restaurants & Leisure | 559 | 15.31 |
| 2282947 | USA | Commercial Services & Supplies | 772 | 11.01 |
| 2000019 | USA | Retailing | 325 | 25.69 |
| 2220884 | USA | Software & Services | 158 | 52.57 |
| 2928683 | USA | Consumer Durables & Apparel | 410 | 20.27 |
| 2685007 | USA | Materials | 1,693 | 4.81 |
| 2695921 | USA | Health Care Equipment & Service | 217 | 37.33 |
| 2232793 | USA | Materials | 176 | 45.43 |
| 2592538 | USA | Technology Hardware & Equipment | 279 | 28.64 |
| 2222307 | USA | Capital Goods | 9,021 | 0.88 |
| 2804211 | USA | Retailing | 5,209 | 1.51 |
| 2276605 | USA | Commercial Services & Supplies | 362 | 21.45 |
| 2831543 | USA | Transportation | 198 | 39.01 |
| 2867913 | USA | Technology Hardware & Equipment | 246 | 31.23 |
| 2766805 | USA | Insurance | 213 | 35.82 |
| 2892045 | USA | Media | 794 | 9.42 |
| 2445966 | USA | Banks | 319 | 23.32 |
| 2305844 | USA | Technology Hardware & Equipment | 193 | 37.98 |
| 2670058 | USA | Software & Services | 106 | 68.97 |

(continued)

| 2327495 | USA | Hotels Restaurants & Leisure | 11,694 | 0.62 |
|---|---|---|---|---|
| 2829515 | USA | Utilities | 228 | 31.43 |
| 2136475 | USA | Commercial Services & Supplies | 108 | 66.13 |
| 2101503 | USA | Consumer Durables & Apparel | 476 | 15.01 |
| 2708078 | USA | Software & Services | 198 | 36.03 |
| 2840549 | USA | Consumer Durables & Apparel | 649 | 10.69 |
| 2131179 | USA | Real Estate | 12,552 | 0.54 |
| 2253006 | USA | Automobiles & Components | 96 | 69.65 |
| 2134673 | USA | Capital Goods | 182 | 36.77 |
| 2199326 | USA | Retailing | 763 | 8.46 |
| 2574707 | USA | Materials | 136 | 47.16 |
| 2745202 | USA | Commercial Services & Supplies | 889 | 7.15 |
| 2028572 | USA | Capital Goods | 1,170 | 5.41 |
| 2380863 | USA | Capital Goods | 3,716 | 1.64 |
| 2726951 | USA | Media | 126 | 46.21 |
| 2883395 | USA | Materials | 131 | 44.2 |
| 2279002 | USA | Media | 10,453 | 0.55 |
| 2574310 | USA | Consumer Durables & Apparel | 163 | 35.09 |
| 2519861 | USA | Consumer Durables & Apparel | 14,305 | 0.39 |
| 2562490 | USA | Commercial Services & Supplies | 126 | 43.43 |
| 2183244 | USA | Consumer Durables & Apparel | 116 | 47 |
| 2413242 | USA | Pharmaceuticals & Biotechnology | 150 | 36.17 |
| 2600260 | USA | Automobiles & Components | 401 | 13.17 |
| 2200110 | USA | Real Estate | 180 | 29.13 |
| 2567503 | USA | Real Estate | 150 | 34.39 |
| 2120649 | USA | Telecommunication Services | 149 | 33.07 |
| 2464165 | USA | Materials | 145 | 33.58 |

**Appendix B**

| Representative set of 25 stocks out of 566 | |
|---|---|
| **Stock Code** | **Domestic HG Quantity** |
| 925288 | 20,463.59 |
| 5902941 | 871,463.00 |
| 719210 | 4,728.30 |
| 798059 | 5,284.17 |
| 7103065 | 1,331,503.48 |

(continued)

| Representative set of 25 stocks out of 566 | |
|---|---|
| Stock Code | Domestic HG Quantity |
| 5202704 | 5,194.53 |
| 989529 | 232,372.56 |
| 540528 | 12,306.68 |
| 4616696 | 17,877.13 |
| 5727973 | 4,445.00 |
| 4834777 | 13,456.00 |
| 4905413 | 38,697.24 |
| 5058877 | 43,218.00 |
| 7110388 | 2,077.37 |
| 803414 | 1,957.12 |
| 5732524 | 7,428.87 |
| 4736817 | 4,560.97 |
| 5959378 | 4,262.00 |
| 5529027 | 90,617.00 |
| 5986622 | 3,395.00 |
| 5975006 | 3,074.00 |
| 5962354 | 1,899.61 |
| 870612 | 1,933.62 |
| 140843 | 3,431.91 |
| 754783 | 119,069.37 |

**Appendix C**

| Representative set of 25 stocks out of 834 | |
|---|---|
| Stock Code | International HG Quantity |
| 2380498 | 6,042.73 |
| 2588173 | 3,054.54 |
| 2198163 | 849.76 |
| 2434209 | 2,835.60 |
| 2190385 | 2,455.14 |
| 2333889 | 3,102.26 |
| 2295172 | 987.53 |
| 2262314 | 777.43 |
| 2038010 | 376.28 |
| 2661568 | 1,004.74 |

(continued)

| Representative set of 25 stocks out of 834 | |
|---|---|
| **Stock Code** | **International HG Quantity** |
| 6643108 | 491.07 |
| 2583877 | 428.20 |
| 6643108 | 491.07 |
| 2583877 | 428.20 |
| 6448068 | 985.67 |
| 6640284 | 14,292.41 |
| 2365161 | 275.37 |
| 6483809 | 175.39 |
| 2937667 | 12,611.66 |
| 6190273 | 1,099.28 |
| 2212858 | 130.40 |
| 2399892 | 291.63 |
| 2109723 | 4,517.39 |

| Industries which have zero HomeGlobal Quantity (equating to 354 stocks) | | |
|---|---|---|
| **Industry Code** | **Country** | **Industry Group** |
| 2868165 | USA | Food & Drug Retailing |
| 2879327 | CANADA | Materials |
| 2883395 | USA | Materials |
| 2910970 | USA | Energy |
| 2914273 | USA | Energy |
| 2931205 | USA | Materials |
| 2931744 | USA | Banks |
| 2934839 | USA | Food & Drug Retailing |
| 2942188 | USA | Banks |
| 2956662 | CANADA | Food & Drug Retailing |
| 2958936 | USA | Materials |
| 2989828 | USA | Banks |
| 6054409 | JAPAN | Food Beverage & Tobacco |
| 6054603 | JAPAN | Materials |
| 6056977 | JAPAN | Banks |
| 6065586 | AUSTRALIA | Banks |
| 6066608 | AUSTRALIA | Materials |
| 6070041 | AUSTRALIA | Food Beverage & Tobacco |
| 6075648 | HONG KONG | Banks |

**Claims**

1. A data processing system (6) for transforming input data relating to a set of financial instruments to an output data set representing a compensated distribution of financial instruments, the data processing system (6) comprising:

    data storage means (7) to store data representing a set of like financial instruments in a form that includes a unique identifier (101), a group identifier (103), a nationality identifier (102), a contemporaneous quantity (104) and the contemporaneous value (105) for each said instrument;
    input means to receive a user specified input, setting one of said nationality identifiers to be domestic;
    data processing means (9, 10, 11, 12) that operates on said stored data set to test, for each sub-set of instruments within each said group, whether there is adequacy of the domestic financial instruments within that group, and if not, to account for shortfalls from non-domestic instruments in the respective group, and to determine a compensated set of instruments as a quantity of domestic instruments where there is adequacy in any group and a quantity of non-domestic instruments where there is a shortfall in any group; and
    output means (13) to output said compensated set of instruments.

2. A data processing system as claimed in claim 1, wherein adequacy is calculated, for each group, by determining a global weight (206) as a fraction of the total market capitalisation of all instruments within the whole input data set, and a domestic weight (204) as a fraction of the total market capitalisation of the domestic instruments within the whole input data set, and comparing the respective global weight and the domestic weight for each group, such that there is adequacy if the domestic weight exceeds the global weight.

3. A data processing system as claimed in claim 2, wherein:

    said quantity of each domestic instrument is based on the global weight of the respective group when there is adequacy and the domestic weight if there is not adequacy,
    and said quantity of each non-domestic instrument is zero when there is adequacy, or based on the difference between the domestic weight and global weight of the respective group when there is not adequacy.

4. A data processing system as claimed in claim 3, wherein,
    for said domestic instruments, a domestic scaling factor (208) is calculated as the required weight divided by the actual weight, and said domestic scaling factor (208) is applied to the value of each relevant stock to give said quantity, and
    for the non-domestic stocks for which there is not adequacy, a non-domestic scaling factor (209) is calculated as the said difference divided by the actual weight, and said non-domestic scaling factor is applied to the value of the value of each relevant stock to give said quantity.

5. A data processing system as claimed in claim 4, wherein said quantities are scaled by the total domestic market capitalisation of said domestic stocks.

6. A data processing system as claimed in any one of the preceding claims, wherein the input means receives a user specified input representing a chosen monetary total market value against which said quantities of domestic and non-domestic instruments are scaled.

7. A data processing system as claimed in any one of the preceding claims wherein said input means receives set of financial instruments to be stored in said data storage means (7) from an external source.

8. A data processing system as claimed in any one of the preceding claims, wherein said output means is connected to a network (20), to which user machines (22-28) can have access, and by which said user inputs are received.

9. A storage medium storing computer implementable instructions for causing a programable computer to become configured as a data processing system in accordance with any of claims 1-7.

Fig. 1

Fig. 2

| Industry | Local Capitalisation | Global Capitalisation | Local Weight | Global Weight | Local Scale Factor | Non Local Scale Factor |
|---|---|---|---|---|---|---|
| | 200 | 202 | 204 | 206 | 208 | 209 |
| Automobiles & Components | 1,275 | 3,335 | 2.00% | 2.08% | 100% | 1.53% |
| Banks | 10,372 | 15,296 | 16.27% | 9.54% | 58.65% | 0% |
| Capital Goods | 2,837 | 12,169 | 4.45% | 7.59% | 100% | 14.33% |
| • | • | • | • | • | • | • |
| • | • | • | • | • | • | • |
| • | • | • | • | • | • | • |
| • | • | • | • | • | • | • |
| • | • | • | • | • | • | • |
| • | • | • | • | • | • | • |
| Utilities | 2,530 | 6,590 | 3.97% | 4.11% | 100% | 1.40% |
| Total | 63,750 | 160,336 | 100% | 100% | - | - |

Fig. 3

EP 1 467 296 A1

```
┌─────────────────────────┐
│      Read in data set    │────  40
└─────────────────────────┘
            │
            ▼
┌─────────────────────────┐
│   Calculate industry     │
│     group weights        │────  42
│      per country         │
└─────────────────────────┘
            │
            ▼
┌─────────────────────────┐
│  Calculate weight scaling │
│        factors           │────  44
└─────────────────────────┘
            │
            ▼
┌─────────────────────────┐
│    Calculate domestic    │────  56
│       market cap.        │
└─────────────────────────┘
            │
            ▼
┌─────────────────────────┐
│   Specify market value of │────  57
│    HomeGlobal portfolio  │
└─────────────────────────┘
            │
            ▼
┌─────────────────────────┐
│   Calculate HomeGlobal    │
│   Quantity for domestic  │────  58
│        stocks            │
└─────────────────────────┘
            │
            ▼
┌─────────────────────────┐
│  Calculate international  │────  70
│    scaling factors list  │
└─────────────────────────┘
            │
            ▼
┌─────────────────────────┐
│   Calculate HomeGlobal    │
│ Quantity for non-domestic │────  78
│        stocks            │
└─────────────────────────┘
            │
            ▼
┌─────────────────────────┐
│      Output results      │────  80
└─────────────────────────┘
```

Fig. 4

Get industry group — 46

global weight
<
domestic weight — 48

False

True

required dom. weight
=
global weight — 50

required dom. weight
=
dom. weight — 52

domestic weight
< > 0? — 53

False

True

weight scaling factor
=
required dom. weight/domestic weight — 54

weight scaling
factor = 0 — 55

Fig. 5

58

```
┌─────────────────────────────────┐
│          market value           │
│              =                  │──── 60
│  quantity of shares * stock price │
└─────────────────────────────────┘
                │
                ▼
┌─────────────────────────────────┐
│          stock weight           │
│              =                  │──── 62
│ (market value/domestic market cap.) * │
│          scale factor           │
└─────────────────────────────────┘
                │
                ▼
           ╱─────────╲
          ╱    If     ╲
         ╱ stock weight ╲──── 64
         ╲      >        ╱            False
          ╲ max. stock  ╱─────────────────┐
           ╲  weight   ╱                  │
            ╲─────────╱                   │
                │                         │
              True                        │
                ▼                         │
┌─────────────────────────────────┐       │
│     required domestic weight    │       │
│              =                  │──── 66 │
│     required domestic weight    │       │
│        - (stock weight          │       │
│      - maximum stock weight)    │       │
└─────────────────────────────────┘       │
                │                         │
                ▼                         │
┌─────────────────────────────────┐       │
│          stock weight           │       │
│              =                  │──── 68 │
│        max. stock weight        │       │
└─────────────────────────────────┘       │
                │◄────────────────────────┘
                ▼
┌─────────────────────────────────┐
│       HomeGlobal quantity       │
│              =                  │──── 69
│  market value HomeGlobal portfolio * │
│      stock weight/stock price   │
└─────────────────────────────────┘
```

Fig. 6

70

```
Required weight =
global weight –
required domestic weight
```
72

```
International weight =
global weight – domestic weight
* (domestic market cap/global market cap)
```
74

```
International scaling
factor = (required weight/international weight)
(market value of HomeGlobal portfolio/global market cap)
```
76

Fig. 7

| (company name) | (country) | (Recommended quantity of shares) |
|---|---|---|
| (company name) | (country) | (Recommended quantity of shares) |
| • <br> • <br> • <br> • <br> • | • <br> • <br> • <br> • <br> • | • <br> • <br> • <br> • <br> • |
| (company name) | (country) | (Recommended quantity of shares) |

Fig. 8

**European Patent**
**Office**

**DECLARATION**

which under Rule 45 of the European Patent Convention EP 03 25 2209
shall be considered, for the purposes of subsequent
proceedings, as the European search report

*Application Number*

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The claims relate to subject matter
excluded from patentability under Art.
52(2) and (3) EPC. Given that the claims
are formulated in terms of such subject
matter or merely specify commonplace
features (i.e. data storage means, data
processing means) relating to its
technological implementation, the search
examiner could not establish any technical
problem which might potentially have
required an inventive step to overcome.
Hence it was not possible to carry out a
meaningful search into the state of the
art (Rule 45 EPC). See also Guidelines
Part B Chapter VIII, 1-6.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

---

-----

| Place of search | Date | Examiner |
|---|---|---|
| MUNICH | 30 July 2003 | Glaser, N. |

EPO FORM 1504 (P04C37)